# EUROPEAN PATENT SPECIFICATION

(11) **EP 2 401 140 B1**
(45) Date of publication and mention of the grant of the patent: **20.04.2016**
(21) Application number: 10712481.0
(22) Date of filing: 15.02.2010
(51) Int. Cl.: B29D 30/48, B60C 15/06

(54) **PROCESS FOR MANUFACTURING TYRES FOR VEHICLE WHEELS**
VERFAHREN ZUR HERSTELLUNG VON FAHRZEUGREIFEN
PROCEDE DE FABRICATION DES PNEUMATIQUES DE VEHICULE

(30) Priority: 24.02.2009 IT MI20090256; 28.05.2009 US 181843 P
(43) Date of publication of application: 04.01.2012
(73) Proprietor: Pirelli Tyre S.p.A., 20126 Milano (IT)
(72) Inventor: MARCHINI, Maurizio, I-20126 Milano (IT); MANCINI, Gianni, I-20126 Milano (IT); MERLO, Luca, I-21013 Gallarate - Varese (IT)
(74) Representative: Castiglia, Paolo
(86) International application number: PCT/IB2010/000292
(87) International publication number: WO 2010/097671

(56) References cited:
- EP-A- 1 418 043
- EP-A- 1 683 628
- EP-A- 1 897 681
- DE-A1-102004 008 308
- DE-U1-202004 020 591

## Description

The present invention relates to a process for manufacturing tyres for vehicle wheels.

The invention also relates to a process and an apparatus for depositing an annular reinforcing element on an annular anchoring structure of a tyre for vehicle wheels, said process and said apparatus being able to be used in carrying out the aforementioned process for manufacturing the tyre.

A tyre for vehicle wheels generally comprises a carcass structure comprising at least one carcass ply formed of reinforcing cords incorporated in an elastomer matrix. The carcass ply has end edges respectively engaged with annular anchoring structures arranged in the zones usually identified with the name of "beads" and normally consisting each of a substantially circumferential annular insert on which at least one filling insert is applied, in a radially outer position thereof. Such annular inserts are commonly identified as "bead cores" and have the task of keeping the tyre firmly fixed to the anchoring seat specifically provided in the rim of the wheel, thus preventing, in operation, the radially inner end edge of the tyre coming out from such a seat.

At the beads specific reinforcing structures may be provided having the function of improving the torque transmission to the tyre. The region of the bead, indeed, is particularly active in the torque transmission from the rim to the tyre in acceleration and braking, and therefore the provision of appropriate reinforcing structures in such an area ensures that the torque transmission occurs with the maximum possible reactivity.

In a radially outer position with respect to the carcass ply, a belt structure comprising one or more belt layers is associated, said belt layers being arranged radially one on top of the other and having textile or metal reinforcing cords with crossed orientation and/or an orientation substantially parallel to the direction of circumferential extension of the tyre.

Between the carcass structure and the belt structure a layer of elastomeric material, known as "under-belt", can be provided, said layer having the function of making the radially outer surface of the carcass structure as uniform as possible for the subsequent application of the belt structure.

In a radially outer position with respect to the belt structure a tread band is applied, also made from elastomeric material as well as other structural elements making up the tyre.

Between the tread band and the belt structure a so-called "under-layer" of elastomeric material can be arranged, said layer having properties suitable to ensure a steady union of the tread band itself.

On the side surfaces of the carcass structure respective sidewalls of elastomeric material are also applied, each extending from one of the side edges of the tread band up to the respective annular anchoring structure to the beads.

The traditional processes for manufacturing tyres for vehicle wheels essentially provide for the components of the tyre listed above to be first made separately from one another, to be then assembled in a subsequent building step of the tyre.

However, the current tendency is that of using manufacturing processes that allow the manufacturing and storage of semi-finished parts to be minimised or possibly eliminated. In such processes, each component of the tyre is directly formed on a forming support, for example as illustrated in EP 0 928 680 in the name of the same Applicant.

More specifically, attention has now turned towards process solutions that allow the individual components of the tyre to be made by directly applying them, according to a predetermined sequence, onto the tyre being built on a forming support, typically toroidal or cylindrical.

Throughout the present description and in the subsequent claims, the term "annular reinforcing element" is used to indicate an element comprising one or more thread-like reinforcing elements that are substantially parallel to one another, such as textile or metallic cords, optionally incorporated in, or coated with, a layer of elastomer material, such an element being cut to size by a band-like element to form a head portion and a tail portion intended to be joined together.

The term "elastomer material", on the other hand, is used to indicate a composition comprising at least one elastomer polymer and at least one reinforcing filler. Preferably, such a composition also comprises additives like, for example, a cross-linking agent and/or a plasticizer. Thanks to the provision of the cross-linking agent, such a material can be cross-linked through heating, so as to make the end product.

EP 1 418 043 discloses a method for forming an annular elastomeric tire component, comprising the steps of extruding onto a support surface and shaping at least one strip of the elastomeric material to a predetermined profile by forming the at least one strip of material between a shaping die and the support surface thereby smoothing and spreading the strip to the desired profile. The support surface may be separate from a tire building station or may be integral to a tire building station. The formed strips may include one or more tire components such as a side-wall, a chafer, a bead apex, ply stock coatings and an innerliner or a tread.

EP 1 897 681 discloses a chipper and apex subassembly as an intermediate article of manufacture in a pneumatic tire, having an apex strip formed as a continuous elastomeric strip of unvulcanized material provided with a bottom base portion and two opposite sides extending towards the narrow outer tip and a chipper ply strip reinforced with parallel cords oriented on a bias angle relative to the length of the strips and attached to one side of the unvulcanised apex strips on an outer surface.

EP 1 683 628 discloses a method of manufacturing a tire in which preset beads each preformed by mounting a bead filler on a bead core are disposed radially outward of a carcass band and both side portions of the carcass band are turned around preset beads to build the tire.

DE 10 2004 008 308 discloses a method for the production of a vehicle pneumatic tire including a radial ply casing, two sidewalls, two bead areas with bead cores and core profiles, and two bead reinforcements comprising tire cords. Additionally, the two bead areas are reinforced in a circumferential direction of the vehicle pneumatic tire with the two bead reinforcements. Furthermore, the tire cords are arranged directly in the bead areas without any embedding into a rubber strip.

DE 20 2004 020 591 discloses a bead wire and bead filler strip assembly manufacturing plant. The plant comprises a table with three of more winding discs. The table is moved between different position stations by a motor. Rubberised circular bead wires are wound at a first position and at a second position an extruded bead filler strip is applied onto a bead wire. In a third position the wound bead wire and filler strip assembly are removed from the winding disc by an extractor. The wire feeding system comprises a wire unwinder, an extruder for coating the single bead wire, a loop storage system for rubberised wires and a feeding mechanism supplying the latter to the winding disc in the first Position.

US 5,336,358 describes a process and an apparatus for depositing an annular reinforcing element on the radially inner surface and on a radially inner portion of the side surfaces of the substantially circumferential annular insert of an annular anchoring structure. The apparatus comprises, in the central portion thereof, a rotating platform provided with four arms extending radially at 90° one from the other and having, at the respective free end portions, respective drums for locking the annular anchoring structure. The apparatus further comprises four service stations arranged around the aforementioned rotating platform. In a first service station, the substantially circumferential annular insert of the annular anchoring structure is loaded onto one of the aforementioned blocking drums of the annular anchoring structure. In a second service station, the filling insert is applied onto the substantially circumferential annular insert of the annular anchoring structure. In a third service station, the annular reinforcing element is applied onto the substantially circumferential annular insert of the annular anchoring structure already provided with the filling insert. In a fourth service station, the annular anchoring structure thus reinforced is unloaded from the apparatus. The deposition of the annular reinforcing element onto the substantially circumferential annular insert of the annular anchoring structure takes place through inflation of suitable air chambers that turn the annular reinforcing element on the radially inner surface and on the side surfaces of the substantially circumferential annular insert.

The Applicant has focussed its attention on tyres wherein the annular reinforcing element is arranged between the filling insert of the annular anchoring structure and the end edge of the carcass ply. Such an annular reinforcing element is typically indicated, in the field of tyres, with the term "chafer". This term will often be used also in the rest of the present description.

The Applicant has observed that the deposition of such an annular reinforcing element is typically carried out, during the building of the carcass structure of the tyre on the forming support, before positioning the annular anchoring structure on the end edge of the carcass ply. In particular, the annular reinforcing element is obtained by cutting to size a band-like reinforced element previously collected into a specifically provided reel. After cutting, the annular reinforcing element is deposited flat, manually or automatically, on the end edge of the carcass ply previously deposited on a cylindrical forming support.

In a traditional process of the type described above, once the annular reinforcing element has been deposited on the end edge of the carcass ply, it must be pulled down together with the end edge of the carcass ply to allow the annular anchoring structure to be positioned.

The Applicant has observed that during the pulling down operation of the end edge of the carcass ply the annular reinforcing element is subjected to a deformation due to the change of the diameter. Due to the lack of complete adhesion of the annular reinforcing element on the carcass ply, the aforementioned deformation causes the formation on the annular reinforcing element of creases and/or wrinkles that, in the built tyre, constitute manufacturing defects.

The Applicant has also observed that, in conventional processes wherein the steps of loading/unloading the annular reinforcing element onto/from the end edge of the carcass ply are carried out manually, the probable presence of metallic and/or textile cords projecting from the side surfaces of the annular reinforcing element can make such an element difficult to handle, involving risks of cutting for the workers.

The Applicant has also noted that, being necessary to provide a specific step of depositing the annular reinforcing element after the deposition of the carcass ply on the forming support and before the positioning of the annular anchoring structure, there is an overall increase in the building time of the carcass structure, as well as an increase in the initial setting time of the building machine. Moreover, there is a reduction in the overall production yield of the building machine, due to the need to periodically interrupt the building process of the carcass structure in order to replace the reel on which the band-like reinforced element is collected.

The Applicant has also observed that a process of the type described above requires a large initial investment to prepare, in the machine for building the carcass structure, all of the members and devices necessary to make and deposit the annular reinforcing element. Such a large investment seems unjustified to the Applicant particularly if it is considered that the deposition of the annular reinforcing element is only carried out for specific fitting and specific types of tyres.

The Applicant has verified that, by associating the annular reinforcing element directly to the filling insert of the annular anchoring structure, and thus positioning on the end edge of the carcass ply an annular anchoring structure provided with the annular reinforcing element, possible handling problems of the annular reinforcing element are avoided and, above all, there is no risk of generating undesired creases and/or wrinkles on the annular reinforcing element. Indeed, in such a case, the annular reinforcing element is not positioned on the end edge of the carcass ply before pulling down it for the positioning of the annular anchoring structure, but the annular reinforcing element is associated directly to the filling insert of the annular anchoring structure. Therefore, the annular reinforcing element no longer has to be pulled down together with the end edge of the carcass ply to allow the positioning of the.annular anchoring structure. It follows that the annular reinforcing element, once positioned on the end edge of the carcass ply together with the annular anchoring structure, will maintain the shape and the position set at the design stage, to the great benefit of the quality of the tyre that will be manufactured.

More specifically, the Applicant has found that, by depositing the annular reinforcing element on the filling insert of the annular anchoring structure through a process that preferably is off-line with respect to the process for building the carcass structure and comprising the steps of:
- loading the annular anchoring structure, already provided with the filling insert, onto a service platform;
- associating the annular reinforcing element to an annular portion of the side surface of the filling insert;
- unloading the annular anchoring structure thus reinforced from the service platform;
it is possible to manufacture an annular anchoring structure, preferably a plurality thereof, provided with an annular reinforcing element at the filling insert. The use of such an annular anchoring structure in the process for building the carcass structure thus allows a tyre to be obtained that is substantially without defects at the bead.

The present invention therefore relates, in a first aspect thereof, to a process for manufacturing tyres for vehicle wheels, comprising the step of building a carcass structure comprising at least one carcass ply associated, at axially opposite end edges thereof, to respective annular anchoring structures, each annular anchoring structure comprising at least one substantially circumferential annular insert and at least one filling insert associated to the substantially circumferential annular insert;
wherein the step of building the carcass structure comprises the step of providing at least one annular reinforcing element between at least one annular portion of a side surface of the filling insert of at least one annular anchoring structure and the respective end edge of the carcass ply;
wherein the step of providing said at least one annular reinforcing element comprises the steps of:
- loading the annular anchoring structure onto a service platform;
- associating the annular reinforcing element to the annular portion of the side surface of the filling insert in a radially outer position with respect to said substantially circumferential annular insert, so as to form a reinforced annular anchoring structure;
- unloading the reinforced annular anchoring structure from the service platform;
- positioning the reinforced annular anchoring structure on the end edge of the carcass ply.

Advantageously, the Applicant believes that, by the process described above, high-quality tyres can be manufactured, wherein the annular reinforcement elements to be provided at the beads of the tyre, once associated to the annular anchoring structure, maintain the shape and position set at the design stage.

The Applicant also believes that, with reference to the traditional processes for building the carcass structure, the process of the present invention allows an advantageous reduction in the building time of the carcass structure and in the initial setting time of the machine for building the carcass structure itself to be achieved. This is due to the fact that the positioning of the annular reinforcing element on the end edge of the carcass ply takes place simultaneously with the positioning of the annular anchoring structure.

The Applicant also observes that the process of the present invention allows an increased overall production yield of the machine for building the carcass structure to be obtained. Indeed, the deposition of the annular reinforcing element on the annular anchoring structure can be carried out before starting the process for building the carcass structure and, therefore, it does not interfere with the process for building the carcass structure itself. This also implies that the initial investment is very low compared to what is necessary to prepare conventional machines for building the carcass structure, in which all of the devices necessary for making and depositing the annular reinforcing element must be provided.

In a second aspect thereof, the present invention relates to a process for depositing an annular reinforcing element onto an annular anchoring structure of a tyre for vehicle wheels, the annular anchoring structure comprising at least one substantially circumferential annular insert and at least one filling insert associated to the substantially circumferential annular insert, the process comprising the steps of:
- loading the annular anchoring structure onto a service platform;
- associating said annular reinforcing element with an annular portion of a side surface of the filling insert in a radially outer position with respect to said substantially circumferential annular insert, so as to form a reinforced annular anchoring structure;
- unloading the reinforced annular anchoring structure from the service platform.

Advantageously, such a process can be used in the process for manufacturing the tyre described above, therefore allowing the advantageous results mentioned above to be achieved.

In a third aspect thereof, the present invention relates to an apparatus for depositing an annular reinforcing element onto an annular anchoring structure of a tyre for vehicle wheels, the annular anchoring structure comprising at least one substantially circumferential annular insert and at least one filling insert associated to the substantially circumferential annular insert, the apparatus comprising:
- a service platform having an operative surface adapted to receive said annular anchoring structure;
- a device for loading/unloading the annular anchoring structure onto/from the service platform;

- a device for feeding a band-like reinforced element towards the service platform;
- a member for cutting to size the band-like reinforced element;
- a device for depositing the band-like reinforced element onto the annular anchoring structure;
wherein the device for feeding the band-like reinforced element comprises an outlet portion oriented towards said operative surface of the service platform so as to associate an annular reinforcing element to an annular portion of a side surface of the filling insert in a radially outer position with respect to said substantially circumferential annular insert, so as to form a reinforced annular anchoring structure.

Advantageously, such an apparatus can be used in carrying out the processes discussed above, therefore allowing the advantageous results mentioned above to be achieved.

The present invention, in at least one of the aforementioned aspects, can comprise at least one of the following preferred features, taken individually or in combination with the others.

Preferably, before the positioning of the reinforced annular anchoring structure on the end edge of the carcass ply, the aforementioned steps of:
- loading the annular anchoring structure onto the service platform;
- associating the annular reinforcing element with the annular portion of side surface of the filling insert; and
- unloading the reinforced annular anchoring structure from the service platform;
are repeated for a preset number of times to form a corresponding preset number of reinforced annular anchoring structures.

It is thus possible to prepare a corresponding plurality of reinforced annular anchoring structures from a plurality of annular anchoring structures. The reinforced annular anchoring structures can be collected in suitable storage members from which they can then be taken, during the building of a carcass structure of one or more tyres, in order to be positioned on the end edge of a carcass ply previously deposited on a forming support.

Preferably, at least a part of the step of associating the annular reinforcing element with the annular portion of the side surface of the filling insert is carried out simultaneously with at least a part of at least one of the steps of loading a different annular anchoring structure onto the service platform and unloading a different reinforced annular anchoring structure from the service platform.

This advantageously allows the deposition of the annular reinforcing element to be carried out on an annular anchoring structure while a new annular anchoring structure is loaded and/or while an annular anchoring structure that has just been reinforced is unloaded. In practice, in this way a new annular anchoring structure is immediately available right after the removal from the service platform of the one that has just been reinforced.

Preferably, the step of loading the annular anchoring structure onto the service platform comprises the steps of:
- taking the annular anchoring structure from a first storage member;
- moving the annular anchoring structure from the first storage member to the service platform.

Even more preferably, the step of unloading the reinforced annular anchoring structure from the service platform comprises the steps of:
- taking the reinforced annular anchoring structure from the service platform;
- moving the reinforced annular anchoring structure from the service platform to a second storage member.

In the preferred embodiment of the present invention, the service platform is able to rotate around a rotational axis. Such a platform preferably comprises a circular-shaped operative surface, such an operative surface being intended to receive the annular anchoring structure in order to carry out then the deposition of the annular reinforcing element on the filling insert of the annular anchoring structure.

Preferably, the step of loading the annular anchoring structure onto the service platform comprises the steps of:
- positioning the annular anchoring structure onto the service platform;
- centring the annular anchoring structure with respect to the rotational axis of the service platform;
- locking the annular anchoring structure onto the service platform in a centred position.

Advantageously, the annular anchoring structure is thus stably positioned onto the service platform in a coaxial and centred position, guaranteeing the precision of positioning of the annular reinforcing element subsequently deposited, which will also be arranged in a coaxial and centred position with respect to the filling insert of the annular anchoring structure, as provided in the design stage.

In particularly preferred embodiments of the present invention, the step of associating the annular reinforcing element with the annular portion of the side surface of the filling insert comprises the steps of:
- feeding a band-like reinforced element towards said annular portion of the side surface of the filling insert;
- associating a head portion of the band-like reinforced element with an angular portion of said annular portion of the side surface of the filling insert;

- rotating the service platform by a preset angle around said rotational axis;
- during the aforementioned rotation, associating new portions of the band-like reinforced element with corresponding angular portions of said annular portion of the side surface of the filling insert;
- associating a tail portion of the band-like reinforced element with an angular portion of said annular portion of the side surface of the filling insert.

Preferably, after a head portion of the band-like reinforced element has been associated to an angular portion of said annular portion of the side surface of the filling insert, the following steps are carried out:
- rotating the service platform around said rotational axis by a first angle α greater than 270° and smaller than 360°;
- during the aforementioned rotation, associating new portions of the band-like reinforced element with corresponding angular portions of said annular portion of the side surface of the filling insert;
- cutting to size the band-like reinforced element thus obtaining a piece of band-like reinforced element having a tail portion;
- rotating the service platform by an angle at least equal to 360°-α around said rotational axis;
- during said rotation by at least 360°-α, associating the tail portion of said piece of band-like reinforced element with said angular portion of said annular portion of the side surface of the filling insert.

In this case, the cutting of the band-like reinforced element is an integral part of the process for depositing the band-like reinforced element onto the filling insert of the annular anchoring structure and it takes place before the service platform completes a turn.

Alternatively, the band-like reinforced element is cut to size before being fed towards said annular portion of the side surface of the filling insert; in this case, the service platform is made to rotate by an angle equal to at least 360°.

Preferably, the process of the present invention further comprises the step of joining the tail portion of the band-like reinforced element to the head portion of the band-like reinforced element by overlapping at least part of said tail portion with at least part of said head portion. Advantageously, in this way the deposition of the band-like reinforced element onto the filling insert of the annular anchoring structure is completed, thus obtaining an annular reinforcing element associated to the aforementioned filling insert at the end of the aforementioned joining step.

In the preferred embodiments of the present invention, the step of feeding the band-like reinforced element towards said annular portion of the side surface of the filling insert comprises the step of guiding the band-like reinforced element towards the service platform along a feeding direction which is tilted by a preset angle with respect to the service platform and which belongs to a plane perpendicular to a pointing plane containing the rotational axis of the service platform.

Preferably, the band-like reinforced element is moved towards the service platform up to bring a free end of the head portion of the band-like reinforced element to a section of the service platform defined by the intersection of said feeding direction with said pointing plane.

The Applicant has found that by operating as described above a homogeneous and uniform deposition of the band-like reinforced element on the filling insert of the annular anchoring structure is obtained, thus avoiding the risk of forming undesired creases and/or wrinkles.

Preferably, the head portion of the band-like reinforced element is obtained by cutting the band-like reinforced element with a preset cutting angle, to form a head vertex at an inner side surface of the band-like reinforced element.

Advantageously, such a vertex identifies the aforementioned free end of the head portion of the band-like reinforced element that must be brought to the aforementioned section of the service platform.

In the preferred embodiments of the present invention, the annular reinforcing element is associated cantilevered to, and projects from a radially external annular portion of the side surface of the filling insert. However, alternative embodiments are provided in which the annular reinforcing element is associated to all or part of the side surface of the filling insert without projecting cantilevered. In any case, the annular reinforcing element is deposited on the side surface of the filling insert in a radially outer position with respect to the substantially circumferential annular insert of the annular anchoring structure. In other words, the annular reinforcing element is deposited only on the side surface of the filling insert, thus without extending also on the side surface of the substantially circumferential annular insert of the annular anchoring structure.

Preferably, during the feeding of the band-like reinforced element towards said annular portion of the side surface of the filling insert, the step of associating an element made of elastomer material on an outer side surface of the band-like reinforced element is carried out.

Advantageously, the provision of an element made of elastomer material on the outer side surface of the band-like reinforced element makes it easier for a worker to possibly manually grip the reinforced annular anchoring structure at the radially most outer portion thereof. Indeed, such an element made of elastomer material substantially covers possible metallic or textile cords projecting from the radially outer side surface of the annular reinforcing element, preventing these cords from being able to cause cuts or wounds to the worker.

Even more advantageously, the aforementioned element made of elastomer material carries out the same functions as the element made of elastomer material, also known as intermediate strip, which is typically deposited between the annular reinforcing element and the carcass ply in a step of the process for building the carcass structure after the step of positioning the annular anchoring structure on the end edge of the carcass ply. The provision in the process of the present invention of the aforementioned element made of elastomer material associated to the annular reinforcing element thus no longer makes it necessary to deposit the intermediate strip.

This implies, first of all, an increase in the overall production yield of the machine for building the carcass structure, the aforementioned increase being obtained due to the fact that the provision of the element made of elastomer material between the annular anchoring structure and the carcass ply no longer takes place during the process for building the carcass structure, but it takes place in an off-line process that does not interfere with the aforementioned building process. Moreover, there is an advantageous reduction in the initial investment costs, such a reduction being obtained due to the fact that it is no longer necessary to provide, in the building line of the carcass structure, those devices that are typically required in conventional processes for depositing the intermediate strip.

Preferably, the aforementioned element made of elastomer material is arranged astride the outer side surface of the band-like reinforced element. However, embodiments of the present invention are provided in which the element made of elastomer material is associated cantilevered to the outer side surface of the band-like reinforced element.

According to a preferred embodiment, the service platform is able to rotate around a rotational axis.

Preferably, a device for centring the annular anchoring structure on the service platform is provided.

More preferably, the service platform comprises a plurality of slots equally spaced in the circumferential direction and oriented radially with respect to the rotational axis of the platform itself. The aforementioned centring device in this case comprises a plurality of arms that cross the service platform from one side to the other, each at a respective slot, such arms being able to be moved radially in a synchronous manner in the respective slots.

Even more preferably, each arm comprises a conical surface portion facing the upper surface of the service platform. Advantageously, such a conical surface ensures complete contact between annular anchoring structure and service platform during the centring of the annular anchoring structure, ensuring subsequent locking.

In the preferred embodiments of the present invention, the device for loading/unloading the annular anchoring structure onto/from the service platform comprises at least one motorised arm for catching and moving the annular anchoring element.

Preferably, there are two motorised arms for catching and moving the annular anchoring structure, a first arm being intended to load the annular anchoring structure onto the service platform and a second arm being intended to unload the reinforced annular anchoring structure from the service platform. In this way it is possible to obtain a partial overlapping of the steps of loading the annular anchoring structure onto the service platform and of unloading the reinforced annular anchoring structure from the service platform.

Preferably, each motorised arm comprises a member for catching the annular anchoring structure. More preferably, said catching member also carries out a centring of the annular anchoring structure.

The catching member preferably comprises a plurality of centring elements equally spaced in the circumferential direction and able to be moved, in a synchronous manner, radially with respect to a central axis.

Preferably, a first storage member of annular anchoring structures to be loaded onto the service platform and a second storage member of reinforced annular anchoring structures unloaded from the service platform are also provided.

The aforementioned storage members preferably form part of a moving line arranged in a position adjacent to the service platform. More preferably, the aforementioned line further comprises a third storage member of annular anchoring structures to be loaded onto the service platform, said third storage member being arranged in the moving line upstream the first storage member, in order to guarantee a continuity of production.

In the preferred embodiments of the present invention, the outlet portion of the device for feeding the band-like reinforced element extends along a feeding direction that is tilted by a preset angle with respect to the service platform and that belongs to a plane perpendicular to a pointing plane containing the rotational axis of the service platform.

Preferably, the device for feeding the band-like reinforced element can be moved along a direction parallel to said pointing plane. Advantageously, such movement allows the position of the feeding device to be adjusted with respect to the service platform as the diameter of the annular anchoring structures on which the annular reinforcing element must be deposited varies.

Preferably, the outlet portion of the device for feeding the band-like reinforced element comprises a plurality of rollers arranged with axes perpendicular to said feeding direction, so as to define a surface for supporting the band-like reinforced element.

The apparatus of the present invention further comprises, preferably, a device for catching and moving a head portion of the band-like reinforced element along a feeding plane parallel to said feeding direction.

Preferably, the catching and moving device comprises an electromagnet or suction cup/intake device which can be moved parallel to said feeding plane. When the annular reinforcing element comprises metallic cords, any of the aforementioned devices can be used; on the other hand, when the annular reinforcing element comprises textile cords, the suction cup/intake device is used.

In preferred embodiments of the present invention, at the outlet portion of the device for feeding the band-like reinforced element, a pair of opposite side containment guides are provided. Advantageously, such guides ensure that the desired radial position of the band-like reinforced element on the side surface of the filling insert of the annular anchoring structure loaded onto the service platform is maintained.

At the outlet portion of the device for feeding the band-like reinforced element and between said cutting member and the service platform there is preferably a U-shaped guide to keep a tail portion of the band-like reinforced element guided.

The cutting member is preferably arranged at the outlet portion of the device for feeding the band-like reinforced element and comprises a disc-shaped blade, a support structure of the blade and an abutment body of the blade arranged in the outlet portion of the device for feeding the band-like reinforced element on the opposite side to the blade with respect to a feeding plane of the band-like reinforced element.

Preferably, the blade is mounted idly on the support structure.

In the preferred embodiments of the present invention, the support structure of the blade is able to rotate around an axis perpendicular to the feeding plane of the band-like reinforced element, so as to be able to set different cutting angles.

Preferably, the support structure of the blade is slidingly mounted on opposite linear guides extending parallel to the feeding plane of the band-like reinforced element. Advantageously, the cutting of the band-like reinforced element is carried out by moving the support structure of the blade, and therefore the blade itself, towards the band-like reinforced element arranged on the outlet portion of the feeding device, such a movement being carried out along a direction corresponding to the set cutting angle.

The blade is preferably mounted on the support structure by the interposition of at least one elastic element adapted to push the blade against said abutment body. Such an elastic element ensures the contact of the blade with the abutment body, avoiding collisions that could damage the blade.

Preferably, the abutment body comprises a groove for housing a radially external annular portion of the blade. Advantageously, such a groove allows the blade to cross the band-like reinforced element from one side to the other, thus allowing a clean and complete cut to be carried out.

More preferably, the abutment body comprises a guiding portion for the blade, defined by a conical surface portion. Advantageously, such a conical portion makes the contact between blade and abutment body easy and gradual when the blade is moved towards the band-like reinforced element to carry out the cutting thereof.

In the preferred embodiments of the present invention, the device for depositing the band-like reinforced element comprises at least one depositing roller having a rotational axis parallel to the service platform, said at least one depositing roller being moveable along a direction perpendicular to the service platform, so as to press the band-like reinforced element on the side surface of the filling insert of the annular anchoring structure deposited on the service platform.

Preferably, a plurality of depositing rollers having respective rotational axes that are parallel to one another are provided. More preferably, such rollers can be moved independently from one another in the direction perpendicular to the service platform, so as to always ensure a constant pressure for all of the aforementioned width as the width of the band-like reinforced element and the cutting angle vary.

Preferably, each roller comprises a grooved radially outer surface. Advantageously, the provision of a grooved surface ensures that the roller exerts a hammering-type action on the band-like reinforced element. Such hammering is advantageous because it avoids that undesired sliding of the roller and/or spreading of the band-like reinforced element occur, which could cause misalignments of the band-like reinforced element with respect to the filling insert.

In the preferred embodiments of the present invention, a member for depositing an element made of elastomer material onto a side surface of the band-like reinforced element is provided.

Preferably, said depositing member comprises a plurality of rollers arranged one after the other along a movement direction of the band-like reinforced element for depositing said element made of elastomer material astride the side surface of the band-like reinforced element, wherein at least some of the respective rotational axes askew with respect to each other.

Further characteristics and advantages of the present invention will become clearer from the following detailed description of some preferred embodiments of an apparatus and of a process in accordance with the present invention, made with reference to the attached drawings. In such drawings:
- figure 1 is a schematic perspective view of an apparatus in accordance with the present invention, in an operative step of the process of the present invention;
- figure 2 is a schematic section view of a constructive detail of the apparatus of figure 1, in an operative step of the process of the present invention;
- figure 3 is a schematic section view of a further constructive detail of the apparatus of figure 1 in an operative step of the process of the present invention;
- figure 4 is a section view taken along the lines I-I of figure 3;
- figure 5 is a plan view of a part of the constructive detail of figure 3;
- figure 6 is a section view taken along the lines II-II of figure 5;
- figure 7 is a schematic perspective and simplified view of the detail of figure 2 in a first operative step of the process of the present invention;
- figure 8 is a simplified schematic plan view of the detail of figure 2 in a second operative step of the process of the present invention;
- figure 9 is a section view taken along the lines III-III of figure 7;
- figure 10 is a schematic side view of a further detail of the apparatus of the present invention, in an operative step of the process of the present invention;
- figures 10a-10e schematically show simplified views of the detail of figure 10 in five successive operative steps.

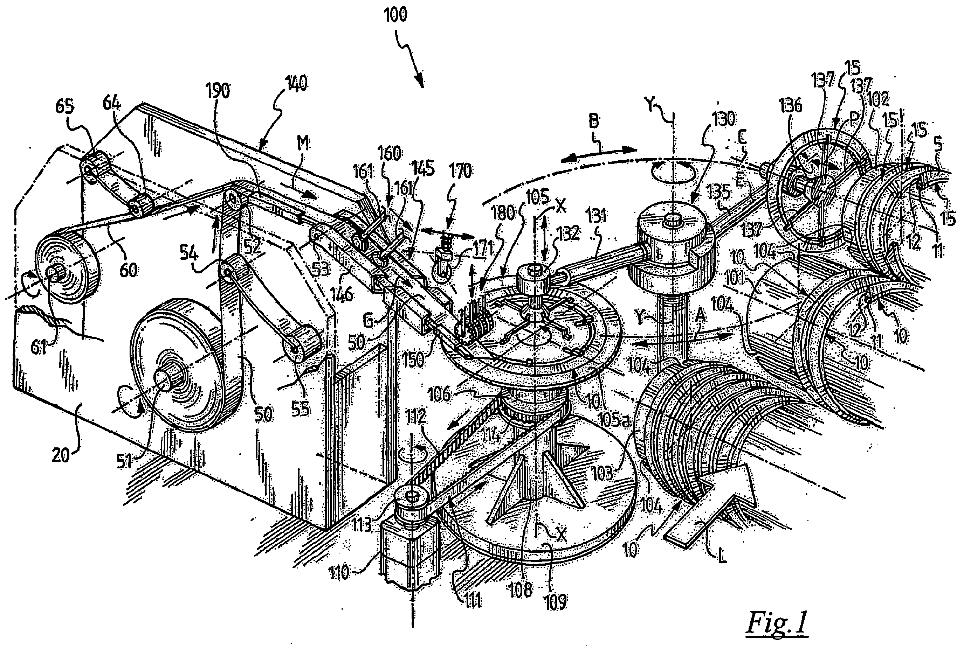

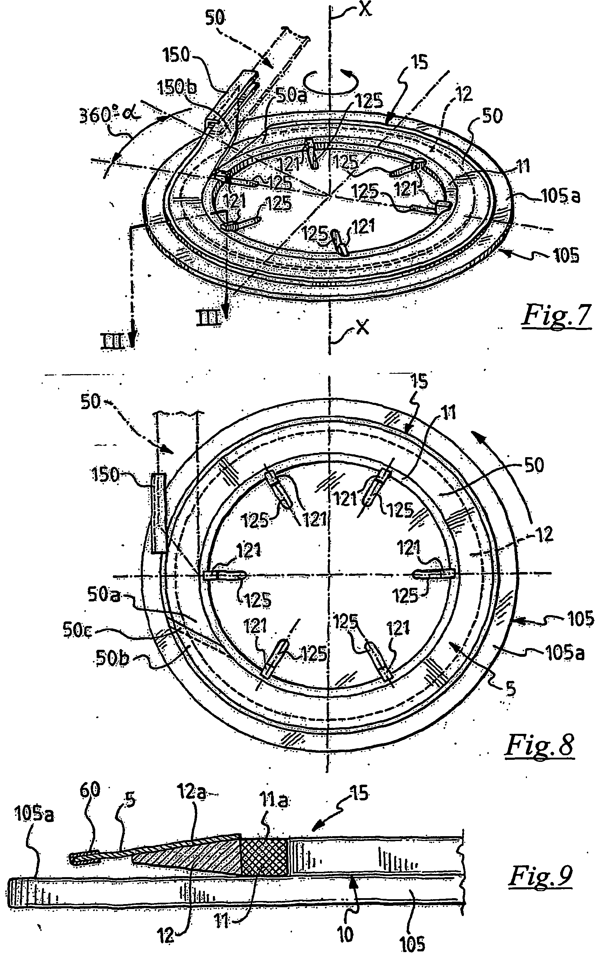

In figure 1, reference numeral 100 globally indicates an exemplifying embodiment of an apparatus for depositing an annular reinforcing element 5 (figure 9) on an annular anchoring structure 10 of a tyre for vehicle wheels, so as to make reinforced annular anchoring structures 15. The apparatus 100 allows a depositing process in accordance with the present invention to be carried out.

As illustrated in figures 1, 2 and 9, the annular anchoring structure 10 comprises a substantially circumferential annular insert 11, also known as bead core, and a filling insert 12 associated to the substantially circumferential annular insert 11 in a radially outer position thereof.

By the apparatus 100 and the depositing process of the present invention, the annular reinforcing element 5 is associated to a side surface 12a of the filling element 12 of the annular anchoring structure 10 (figure 9).

Figure 9 shows the annular reinforcing element 5 deposited on the entire radial extension of the side surface 12a of the filling insert 12 and extending cantilevered from such a surface 12a. Nevertheless, cases are foreseen in which the annular reinforcing element 5 is deposited, optionally cantilevered, on a radially outer (or inner) portion of the side surface 12a of the filling insert 12 without involving the radially inner (or outer) portion of the filling insert 12. Cases are also foreseen in which the annular reinforcing element 5 is deposited over the entire radial extension of the side surface of the filling insert 12 (like in figure 9), without however projecting cantilevered from it. In any case, the annular reinforcing element 5 is arranged in a radially outer position with respect to the substantially circumferential annular insert 11 of the annular anchoring structure 10. In other words, the annular reinforcing element 5 does not involve the side surface 11a of the substantially circumferential annular insert 11.

The reinforced annular anchoring structures 15 are intended to be used in the building of a carcass structure of the tyre, in a totally analogous manner to how the annular anchoring structures 10 are conventionally used. The reinforced annular anchoring structures 15 are thus positioned in the beads of the tyre and are intended to keep the tyre firmly fixed to the anchoring seat specifically provided in the rim of the wheel of the vehicle.

The building of the carcass structure of the tyre comprises the initial step of depositing a carcass ply on a forming support so that the opposite end edges of the carcass ply project cantilevered from the forming support. Then each reinforced annular anchoring structure 15 is associated to each of the opposite end edges of the carcass ply.

In the specific example illustrated in figure 1, the apparatus 100 comprises a member 101 for storing annular anchoring structures 10 (in figure 1 three annular anchoring structures 10 are shown positioned on the member 101, one of which being partially in section), a member 102 for storing reinforced annular anchoring structures 15 (in figure 1 three reinforced annular anchoring structures 15 are illustrated positioned on the member 102, one of them being partially in section) and a member 103 also for storing annular anchoring structures 10 (in figure 1 six annular anchoring structures 10 are illustrated positioned on the member 103). The aforementioned storing members are part of a moving line (generically indicated in figure 1 with the arrow L) and the member 103 is arranged along such a line upstream the member 102, so as to take the place of the latter once all the annular anchoring structures provided on the member 102 have been picked up, thus guaranteeing the continuity of production of the reinforced annular anchoring structures 15.

Each storage member has substantially the shape of a cylindrical drum provided with longitudinal grooves 104 adapted to allow the annular anchoring structures 10 to be gripped at the radially inner surface of the substantially circumferential annular insert 11. The aforementioned grooves also allow the reinforced annular anchoring structures 15 to be released onto the storage member 102. The storage members can nevertheless be of a different type to the one described above; for example, they can be provided in the form of baskets inside which the annular anchoring structures 10 or the reinforced annular anchoring structures 15 are stacked.

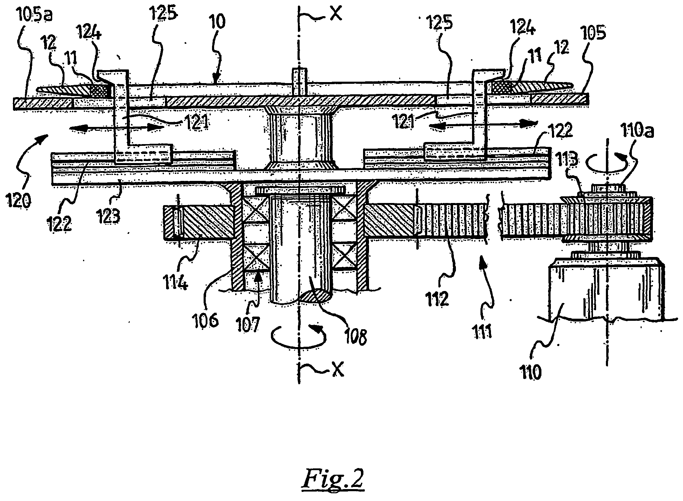

The apparatus 100 comprises, in a position adjacent to the storing members 101, 102, 103, a service platform 105 (illustrated in section in figure 2) having an operative surface 105a (the upper surface, in the attached figures) with a circular shape adapted to receive the annular anchoring structure 10 onto which the annular reinforcing element 5 must be deposited.

As illustrated in figures 1 and 2, the service platform 105 is rigidly associated to a shaft 106 which in turn is mounted, through the interposition of a plurality of rolling bearings 107, on an upright 108 fixedly connected to a base plate 109.

The shaft 106 can be moved in rotation, with controlled speed and acceleration, around an axis X-X. Such a rotation is controlled by a gear motor 110 through a belt transmission system 111. Such a system comprises a toothed belt 112 that engages with a toothed wheel 113 fitted onto the drive shaft 110a of the gear motor 110 and with a toothed wheel 114 fitted onto the shaft 106 which supports the service platform 105.

With reference to figure 2, a device 120 for centring the annular anchoring structure 10 acts on the service platform 105. Such a centring device 120 comprises a plurality of arms 121 (also visible in figure 1, where for the sake of clarity of illustration the reference numeral 121 is not indicated, and in figures 7 and 8) that are equally spaced apart in the circumferential direction with respect to the rotational axis X-X of the service platform 105 and able to be moved radially in a synchronous manner. Each arm is substantially Z-shaped and is slidingly mounted, at a lower end portion thereof, on a respective rail 122 associated to a deck 123 of the service platform 105.

As can be clearly seen in figure 2, each arm 121, at an upper end portion, comprises a conical surface portion 124 facing the upper surface 105a of the service platform 105.

The service platform 105 in turn comprises a plurality of through slots 125. Such slots are equally spaced apart in the circumferential direction and are oriented radially with respect to the rotational axis X-X of the platform 105. Each arm 121 crosses the service platform 105 from one side to the other at a respective slot 125 and can thus slide in the radial direction inside it.

With reference to figure 1, the apparatus 100 further comprises a device 130 for loading the annular anchoring structure 10 onto the service platform 105 and for unloading the reinforced annular anchoring structure 15 from the service platform 105. In particular, the device 130 comprises a first motorised arm 131 which can be moved between the member 101 for storing the annular anchoring structures 10 and the service platform 105 to take the annular anchoring structure 10 from the storage member 101 and load it onto the service platform 105. The device 130 also comprises a second motorised arm 135 that is mobile between the service platform 105 and the member 102 for storing the reinforced annular anchoring structures 15 to unload the reinforced annular anchoring structure 15 from the service platform 105 and put it on the storage member 102. The movement of the first motorised arm 131 is indicated in figure 1 by the broken line alongside the arrow A, whereas the movement of the second motorised arm 135 is indicated in figure 1 by the broken line alongside the arrow B.

The motorised arm 131 is able to rotate around a rotational axis Y-Y parallel to the rotational axis of the service platform 105 and, at a free end thereof, comprises a member 132 for catching the annular anchoring structure 10. Similarly, the motorised arm 135 is able to rotate around the aforementioned rotational axis Y-Y and, at a free end thereof, comprises a member 136 for catching the reinforced annular anchoring structure 15.

The catching members 132 and 136 are identical. For the sake of simplicity of description and clarity of illustration, hereafter we shall therefore describe just one of them (in particular the catching member 136), whereas it is understood that the elements described below with reference to such a catching member are also provided in the catching member 132. Therefore, what is stated below with reference to the catching member 136 is also valid for the catching member 132.

The catching member 136 is able to rotate with respect to an axis of longitudinal extension E of the motorised arm 135 and it is linearly mobile in both ways along a direction perpendicular to said axis E (such a direction is indicated in figure 1 with the arrow P). The catching member 136 comprises a plurality of centring arms 137 that are equally spaced apart in the circumferential direction with respect to a central axis C of the catching member 136 and able to be moved radially, in a synchronous manner, with respect to the aforementioned axis C. Such a radial movement allows the reinforced annular anchoring structure 15 to be caught and released.

The annular reinforcing element 5 to be deposited on the side surface 12a of the filling insert 12 of the annular anchoring structure 10 is obtained by cutting to size a band-like reinforced element 50 which has been previously collected on a reel 51. During actuation of the process of the present invention, the band-like reinforced element 50, which is associated to a service fabric, is unwound from such a reel 51. Thanks to the interaction provided by a first contrast roller 54, the service fabric leaves the band-like reinforced element 50 and is collected on a first winding roller 55. Thereafter, the band-like reinforced element 50, deviated by a first deviating roller 52 and by a second deviating roller 53, is suitably fed onto the upper surface 105a of the service platform 105 through a suitable feeding device 140 (figure 1).

The reel 51, the deviating rollers 52 and 53, the first contrast roller 54 and the first winding roller 55 are preferably housed inside a support frame 20 arranged in a position adjacent to the service platform 105.

Downstream the second deviating roller 53, the feeding device 140 comprises an outlet portion 145 supported cantilevered by the frame 20 and suitably oriented towards the upper surface 105a of the service platform 105.

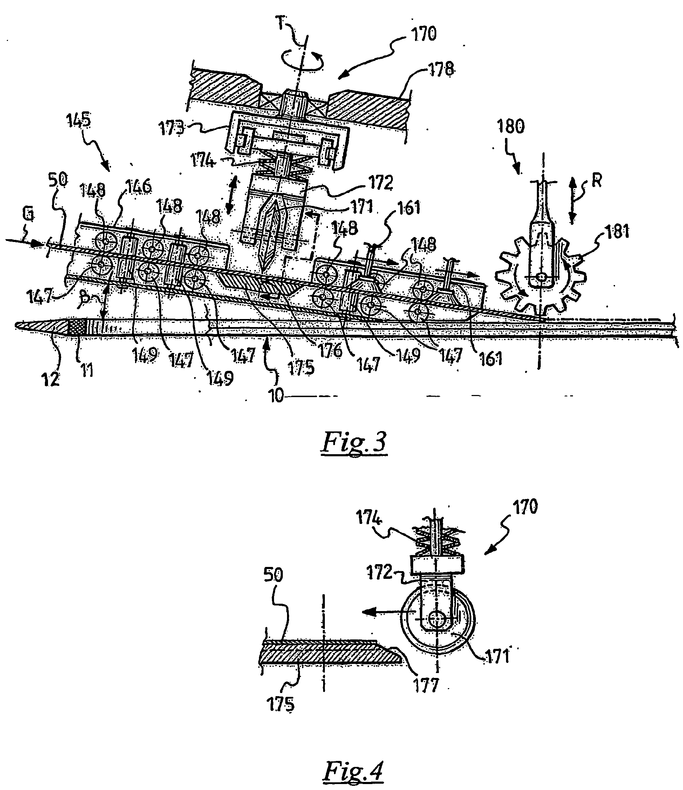

As can be more clearly seen in figure 3, the outlet portion 145 of the feeding device 140 comprises a metallic structure 146 extending along a feeding direction that is tilted by a preset angle β with respect to the service platform. Such a direction is indicated with the arrow G in figures 1, 3 and 5.

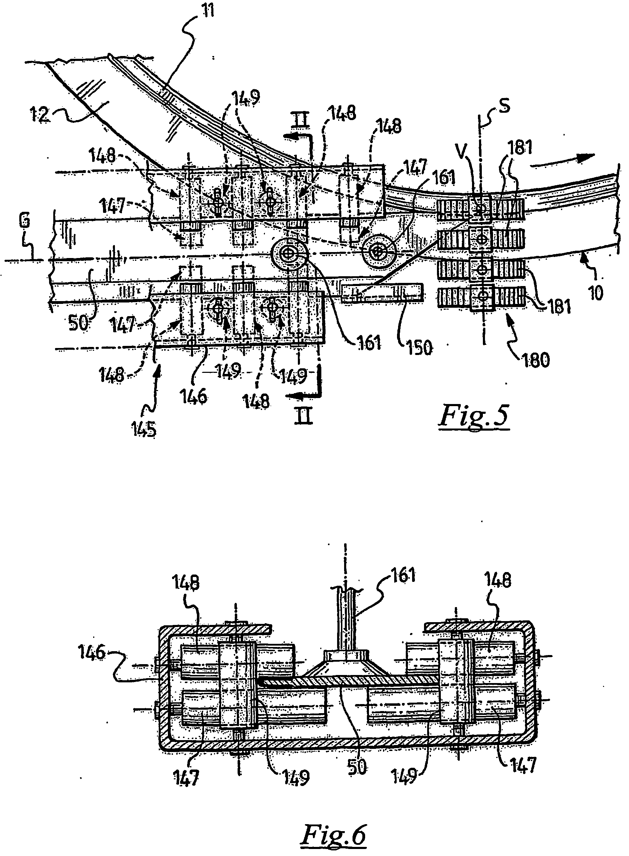

A plurality of rollers 147 having axes parallel to one another are mounted on the metallic structure 146; such axes are oriented perpendicularly to the feeding direction G. The rollers 147 define a support surface for the band-like reinforced element 50 and, therefore, a feeding plane of the band-like reinforced element 50. The rollers 147 are aligned along two rows parallel to the feeding direction G, as shown in the section of figure 6.

Again with reference to figures 3 and 6, above each roller 147 a respective roller 148 is provided, the rotational axis of which is oriented parallel to that of the roller 147. The rollers 148 are thus also arranged along two rows parallel to the feeding direction G and act upon the upper surface of the band-like reinforced element 50 being fed towards the upper surface 105a of the service platform 105. The rollers 148 have a shorter axial extension than that of the rollers 147 (figure 6).

A plurality of rollers 149 are also mounted arranged on the metallic structure 146 with axes perpendicular to the axes of the rollers 147 and 148. The rollers 149 are provided at each row of rollers 147 and 148 between two consecutive rollers 147 and 148 and they act as lateral containment guides for the band-like reinforced element 50 during its feeding thereof towards the upper surface 105a of the service platform 105.

Preferably, the frame 20, and thus the outlet portion 145 of the feeding device 140, can be moved along a direction perpendicular to the feeding direction G, so as to be able to adjust the position of the feeding device 140 with respect to the service platform 105 as the diameter of the annular anchoring structure 10 on which the band-like reinforced element 50 must be deposited varies.

As can be seen in figures 1 and 5, the outlet portion 145 of the feeding device 140 further comprises, at the outer side surface of the band-like reinforced element 50 (with reference to the rotational axis X-X of the service platform 105) and downstream the metallic structure 146 along the feeding direction G, a U-shaped guide 150. The guide 150 acts upon the outer side surface of the band-like reinforced element 50 during its feeding towards the upper surface 105a of the service platform 105 starting from a head portion 50a of the band-like reinforced element 50 (figures 7 and 8), but above all it carries out its guide function after the band-like reinforced element 50 has been cut, to keep a tail portion 50b (figure 7 and 8) of the band-like reinforced element 50 guided towards the upper surface 105a of the service platform 105. Figure 7 shows an intermediate step of the deposition of the band-like reinforced element 50, in which the band-like reinforced element has already been cut and the platform is about to complete a turn. Figure 8 shows a final step of the deposition of the band-like reinforced element 50, in which a part of the tail portion 50b overlaps a part of the head portion 50a so as to join such portions, thus obtaining the annular reinforcing element 5.

The feeding of the band-like reinforced element 50 towards the service platform 105 is carried out by means of a device 160 for capturing and moving the band-like reinforced element 50 along the feeding direction G.

In the embodiment illustrated in the attached figures (see in particular figures 1, 3, 5 and 6) such a device 160 comprises at least one pair of suction cups 161 which can to be moved along the feeding direction G. As can clearly be seen in figure 6, the suction cups slide between the two rows of rollers 148. The movement of the suction cups 161 causes the band-like reinforced element 50 to unwind from the reel 51 and, therefore, causes the feeding of the band-like reinforced element 50 onto the upper surface 105a of the service platform 105.

As an alternative to the suction cups intake members or, in the case in which the annular reinforcing element comprises metallic cords, an electromagnet device can be used, all of which are of the conventional type.

The apparatus 100 of the present invention further comprises a member 170 for cutting the band-like reinforced element 50. The cutting member 170 is arranged at the outlet portion 145 of the device 140 for feeding the band-like reinforced element 50, upstream the U-shaped guide 150.

As can be clearly seen in figures 3 and 4, the cutting member 170 comprises a disc-shaped blade 171 mounted idle on a fork 172 which in turn is mounted on a support structure 173 through the interposition of a spring 174.

The cutting member 170 further comprises an abutment body 175 for the blade 171. The abutment body 175 is arranged in the outlet portion 145 of the feeding device 140 on the opposite side to the blade 171 with respect to the feeding plane of the band-like reinforced element 50 (therefore, between two consecutive rollers 147). The spring 174, in rest condition, pushes the blade 171 against the abutment body 175.

The abutment body 175 comprises a groove 176 for housing a radially outer annular portion of the blade 171 during cutting. The abutment body 175 also comprises, as shown in figure 4, a conical surface portion 177 that defines a guiding portion adapted to make the contact between blade 171 and abutment body 175 easier and gradual when the blade 171 is moved towards the band-like reinforced element 5 in order to cut it.

The support structure 173 of the blade 171 is slidingly mounted on opposite linear guides 178 extending parallel to the feeding plane of the band-like reinforced element 50. The support structure 173 of the blade 171 is also able to rotate around an axis T perpendicular to the feeding plane of the band-like reinforced element 50, so as to be able to set different cutting angles.

The apparatus 100 of the present invention further comprises, downstream the guide 150, a device 180 for depositing the band-like reinforced element 50 on the side surface 12a of the filling insert 12 of the annular anchoring structure 10. Such a device can be seen in figures 1, 3 and 5.

The device 180 preferably comprises a plurality of depositing rollers 181 arranged with the respective rotational axes parallel to one another, such axes being parallel to the upper surface 105a of the service platform 105 and perpendicular to the feeding direction G. Each roller 181 can be moved independently from the others along a direction R perpendicular to the upper surface 105a of the service platform 105, so as to press the band-like reinforced element 50 on the side surface 12a of the filling insert 12.

Each roller 181 comprises a grooved radially outer surface, as illustrated in figure 3.

Upstream the outlet portion 145 of the feeding device 140 the apparatus 100 of the present invention comprises a member 190 for depositing an element made of elastomer material 60 on an outer side surface (with respect to the service platform 105) of the band-like reinforced element 50. As illustrated in figure 1, the member 190 is arranged between the deviating rollers 52 and 53 of the feeding device 140.

The element made of elastomer material 60, which is associated to a service fabric, is collected in a reel 61 housed in the support frame 20. Thanks to the interaction provided by a second contrast roller 64, the service fabric leaves the element made of elastomer material 60 and is collected on a second winding roller 65. Thereafter, the element made of elastomer material 60 unwound from the aforementioned reel 61, is deviated by the deviating roller 52 and, through the member 190, is preferably positioned on the outer side surface of the band-like reinforced element (figure 1).

In the preferred embodiment of the apparatus 100, the element made of elastomer material 60 is arranged astride the outer side surface of the band-like reinforcing element 50 so as to take up the configuration illustrated in figure 9. Alternatively, the element made of elastomer material 60 can be arranged cantilevered on the outer side surface of the band-like reinforced element 50.

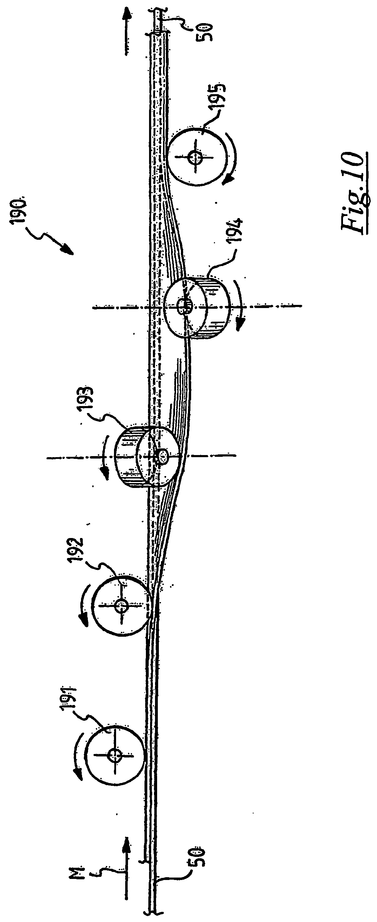

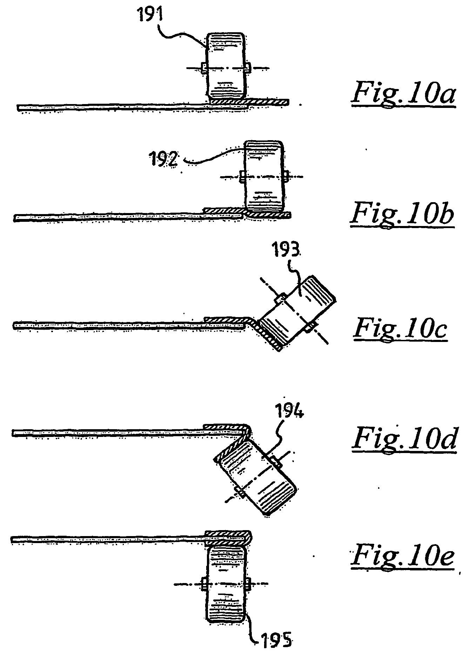

With reference to figure 10, the device 190 comprises a plurality of rollers (five in the illustrated embodiment, indicated with 191-195) arranged one after the other along the movement direction M of the band-like reinforced element 50; at least some of such rollers have the rotational axis askew with respect to the rotational axis of at least some of the other rollers.

In particular, with reference also to figures 10a-10e, the rotational axis of the second roller 192 is parallel to that of the first roller 191, but it is arranged at a lower height with respect to the axis of the roller 191 with reference to the moving plane of the band-like reinforced element 50. The rotational axis of the third roller 193 is askew with respect to that of the rollers 191 and 192. The rotational axis of the fourth roller 194 is askew with respect to that of the rollers 191-193; in particular, it is tilted on the opposite side to the axis of the roller 192 with respect to the moving plane of the band-like reinforced element 50. The rotational axis of the fifth roller 195 is parallel to that of the rollers 191 and 192, but it is arranged on the opposite side to the roller 191 with respect to the moving plane of the band-like reinforced element 50.

The particular arrangement of the rollers 191-195 allows the element made of elastomer material 60 to be deposited astride the outer side surface of the band-like reinforced element 50 while the latter is fed towards the service platform 105.

With reference at first to figure 1, it shall now described a preferred embodiment of the process for depositing the band-like reinforced element 50 on the side surface 12a of the filling insert 12 of an annular anchoring structure 10, so as to form a reinforced annular anchoring structure 15 having an annular reinforcing element 5 associated to the side surface 12a of the filling insert 12. Such a process can be carried out through the apparatus 100 of deposition described above.

In a first step of the process, the annular anchoring structure 10 is picked up from the storage member 101 and loaded onto the upper surface 105a of the service platform 105.

In this step, the motorised arm 131 is brought close to the storage member 101 and the catching member 132 is actuated so as to pick up an annular anchoring structure 10. The picking up of the annular anchoring structure 10 takes place at the radially innermost surface thereof by means of the radial expansion of the arms 137.

The motorised arm 131 is then brought close to the service platform 105. During such movement, the annular anchoring structure 10 is centred on the catching member 132; such a centring is obtained by moving the centring arms 137 radially in a synchronous manner. Moreover, the catching member 132 is rotated around the longitudinal axis of the motorised arm 131. When the catching member is above the service platform 105, it is lowered towards the upper surface 105a of the latter and the annular anchoring structure 10 is released onto the aforementioned surface, positioning it coaxially to the rotational axis X-X. The release of the annular anchoring structure 10 is obtained by synchronously retracting the arms 137 of the catching member 132.

The motorised arm 131, once the annular anchoring structure 10 has been left on the upper surface 105a of the service platform 105, is moved towards the storage member 101, so as to be ready to pick up a further annular anchoring structure 10.

Meanwhile a step of centring and locking in position the annular anchoring structure 10 on the upper surface 105a of the service platform 105 is carried out. In such a step the centring elements 121 move radially in a synchronous manner in the slots 125 of the service platform 105, acting upon the radially inner surface of the annular anchoring structure 10.

At this point the feeding of the band-like reinforced element 50 towards the upper surface 105a of the service platform 105 can begin.

The head portion 50a of the band-like reinforced element 50 is captured by the suction cups 161 that, moving forward along the feeding direction G, bring it to a predetermined annular portion of the side surface 12a of the filling insert 12 of the annular anchoring structure 10 positioned on the upper surface 105a of the service platform 105.

The unwinding of the band-like reinforced element 50 from the reel 51 is caused by the movement of the band-like reinforced element 50 towards the service platform 105.

Preferably, the head portion 50a of the band-like reinforced element 50 is obtained by cutting in advance the band-like reinforced element 50 with a preset cutting angle, to form a head vertex V (figure 5) at the inner side surface of the band-like reinforced element 50. The band-like reinforced element 50 is then moved by the suction cups 161 towards the service platform 105 until the vertex V is brought onto an angular portion of the annular portion of side surface 12a of the filling insert 12. The tilting angle of the outlet portion 145 of the feeding device 140, and thus of the feeding direction G, is selected so that the aforementioned vertex V makes contact with the upper surface 105a of the service platform 105 at a section S of the service platform 105 (figure 5) defined by the intersection of the feeding direction G with a pointing plane containing the rotational axis X-X of the service platform 105.

In its movement towards the service platform 105 the band-like reinforced element 50 is supported at the bottom by the rollers 147, guided at the top by the rollers 148 and at the side by the rollers 149.

The head portion 50a of the band-like reinforced element, once the side surface 12a of the filling insert 12 has been reached, is pressed on such a side surface 12a by the depositing rollers 181. Such pressing action causes a sticking of the head portion 50a onto the side surface 12a.

At this point the service platform 105 is moved in rotation around the axis X-X. By means of the aforementioned sticking, the band-like reinforced element 50 is forced to following the rotation of the annular anchoring structure 10; thus the deposition of successive portions of band-like reinforced element 50 onto adjacent angular portions of the side surface 12a of the filling insert 12 takes place.

The width of the band-like reinforced element 50 creates a difference in extension between inner side surface and outer side surface thereof, which causes a uniform angular deformation of the band-like reinforced element 50. At the radially inner portion thereof, the band-like reinforced element 50 undergoes a minimal or zero angular deformation. The radially outermost annular portion of the band-like reinforced element 50, on the other hand, undergoes an angular deformation that is completely absorbed by the annular portion of the reinforcing element that projects cantilevered from the filling insert 12.

The service platform 105 is made to rotate by a preset angle α, which is preferably between 270° and 360° (figure 7). Once such an angle has been reached, the rotation of the service platform 105 is stopped and the band-like reinforced element 50 is cut, thus obtaining a piece of band-like reinforced element 50 that, for a great part of the longitudinal extension thereof is associated to the side surface 12a of the filling insert 12 and that has a tail portion 50b not yet deposited on the side surface 12a.

When cutting is complete, the service platform 105 is put again in rotation at least until a complete turn is made. During such a rotation the tail portion 50b of the band-like reinforced element 50 is guided by the guide 150 and deposited on the side surface 12a of the filling insert 12.

Preferably, as shown in figure 8, it is ensured that the piece of band-like reinforced element 50 deposited on the side surface 12a of the filling insert has an annular extension greater than 360°, so as to overlap a part of the tail portion 50b over a part of the head portion 50a and thus joining the tail portion 50b with the head portion 50a. In figure 8, the overlapping area between tail portion 50b and head portion 50a is indicated with 50c. In this way a reinforced annular anchoring structure 15 having an annular reinforcing element 5 associated on the side surface 12a of the filling insert 12 is obtained.

As an alternative to the process described above wherein the cutting of the reinforcing element is carried out after a large part of the band-like reinforced element 50 has been deposited on the side surface 12a of the filling insert 12, it is possible to foresee a process in which the band-like reinforced element 50 is cut to size before being fed towards the service platform 105. In this case, the deposition of the band-like reinforced element 50 on the side surface 12a of the filling insert 12 takes place continuously while the service platform 105 rotates by an angle at least equal to 360°.

During the entire step of feeding the band-like reinforced element 50 on the service platform 105, the member 190 applies the element made of elastomer material 60 astride the outer side surface of the band-like reinforced element 50, as illustrated in figure 10 and in figures 10a-10e. In practice, the rollers 191-195, acting one after the other on the element made of elastomer material 60 during the movement of the band-like reinforced element 50, fold the element made of elastomer material 60 on the outer side surface of the band-like reinforced element 50.

The unwinding of the element made of elastomer material 60 from the reel 61 is caused by the aforementioned moving of the band-like reinforced element 50 towards the service platform 105.

Once the deposition of the band-like reinforced element 50 on the side surface 12a of the filling insert 12 has been completed, the reinforced annular anchoring structure 15 is picked up from the service platform 105 and moved onto the storage member 102.

In this step, the motorised arm 135 is brought also to the service platform 105 and the catching member 136 is actuated so as to pick up a reinforced annular anchoring structure 15. The picking up of the reinforced annular anchoring structure 15 takes place at the radially innermost surface thereof by means of the radial expansion of the arms 137.

The motorised arm 135 is then moved until it is positioned at the storage member 102. During such a movement, the catching member 136 is rotated around the longitudinal axis of the motorised arm 135. When the catching member 136 is positioned in front of the storage member 102 (as illustrated in figure 1), it is moved along the direction P and the reinforced annular anchoring structure 15 is released onto the storage member 102. The release of the reinforced annular anchoring structure 15 is obtained by synchronously retracting the arms 137 of the catching member 136.

The motorised arm 135, once the reinforced annular anchoring structure 15 has been left on the storage member 102, is moved towards the service platform 105, so as to be ready to pick up a further reinforced annular anchoring structure 15.

The process described above can be repeated a preset number of times to form, from a plurality of annular anchoring structures, a corresponding plurality of reinforced annular anchoring structures 15 to be used in subsequent processes for building carcass structures for tyres for vehicle wheels.

From the above description, it is clear how the process and the apparatus described above, carrying out a deposition of the annular reinforcing element on the side surface 12a of the filling insert 12 of the annular anchoring structure, allow high-quality tyres to be manufactured, in which the annular reinforcement elements to be provided at the beads of the tyre, being associated to the annular anchoring structure, maintain the shape and position that were preset at the design stage.

Of course, a man skilled in the art can bring further modifications and variants to the invention described above in order to satisfy specific and contingent application requirements, these variants and modifications in any case being within the scope of protection as defined by the following claims.

## Claims

1. Process for manufacturing tyres for vehicle wheels, comprising the step of building a carcass structure comprising at least one carcass ply associated, at axially opposite end edges thereof, to respective annular anchoring structures (10), each annular anchoring structure (10) comprising at least one substantially circumferential annular insert (11) and at least one filling insert (12) associated to the substantially circumferential annular insert (11);
wherein the step of building the carcass structure comprises the step of providing at least one annular reinforcing element (5) between at least one annular portion of a side surface (12a) of the filling insert (12) of at least one annular anchoring structure (10) and the respective end edge of the carcass ply;
wherein the step of providing said at least one annular reinforcing element (5) comprises the steps of:
- loading the annular anchoring structure (10) onto a service platform (105);
- associating the annular reinforcing element (5) to the annular portion of the side surface (12a) of the filling insert (12) in a radially outer position with respect to said substantially circumferential annular insert (11), so as to form a reinforced annular anchoring structure (15);
- unloading the reinforced annular anchoring structure (15) from the service platform (105);
- positioning the reinforced annular anchoring structure (15) on the end edge of the carcass ply.

2. Process according to claim 1, wherein, before carrying out the step of positioning the reinforced annular anchoring structure (15) on the end edge of the carcass ply, the aforementioned steps of:
- loading the annular anchoring structure (10) onto the service platform (105);
- associating the annular reinforcing element (5) to the annular portion of the side surface (12a) of the filling insert (12); and
- unloading the reinforced annular anchoring structure (15) from the service platform (105);
are repeated for a preset number of times to form a corresponding preset number of reinforced annular anchoring structures (15).

3. Process according to claims 1 or 2, wherein at least a part of the step of associating the annular reinforcing element (5) to the annular portion of the side surface (12a) of the filling insert (12) is carried out simultaneously with at least a part of at least one of the steps of loading a new annular anchoring structure (10) onto the service platform (105) and unloading a new reinforced annular anchoring structure (15) from the service platform (105).

4. Process according to any one of the previous claims, wherein the step of loading the annular anchoring structure (10) onto the service platform (105) comprises the steps of:
- taking the annular anchoring structure (10) from a first storage member (101);
- moving the annular anchoring structure (10) from the first storage member (101) to the service platform (105).

5. Process according to any one of the previous claims, wherein the step of unloading the reinforced annular anchoring structure (15) from the service platform (105) comprises the steps of:
- taking the reinforced annular anchoring structure (15) from the service platform (105);
- moving the reinforced annular anchoring structure (15) from the service platform (105) to a second storage member (102).

6. Process for depositing an annular reinforcing element (5) onto an annular anchoring structure (10) of a tyre for vehicle wheels, the annular anchoring structure (10) comprising at least one substantially circumferential annular insert (11) and at least one filling insert (12) associated to the substantially circumferential annular insert (11), the process comprising the steps of:
- loading the annular anchoring structure (10) onto a service platform (105);
- associating said annular reinforcing element (5) to an annular portion of a side surface (12a) of the filling insert (12) in a radially outer position with respect to said substantially circumferential annular insert (11), so as to form a reinforced annular anchoring structure (15);
- unloading the reinforced annular anchoring structure (15) from the service platform (105).

7. Process according to any of the previous claims, wherein the step of loading the annular anchoring structure (10) onto the service platform (105) comprises the steps of:
- positioning the annular anchoring structure (10) onto the service platform (105);
- centring the annular anchoring structure (10) with respect to a rotational axis (X-X) of the service platform (105);
- locking the annular anchoring structure (10) onto the service platform (105) in the centred position.

8. Process according to claim 7, wherein the step of associating the annular reinforcing element (5) to the annular portion of the side surface (12a) of the filling insert (12) comprises the steps of:
- feeding a band-like reinforced element (50) towards said annular portion of the side surface (12a) of the filling insert (12);
- associating a head portion (50a) of the band-like reinforced element (50) to an angular portion of said annular portion of the side surface (12a) of the filling insert (12);
- rotating the service platform (105) by a preset angle (α) around said rotational axis (X-X);
- during the aforementioned rotation, associating new portions of the band-like reinforced element (50) to corresponding angular portions of said annular portion of the side surface (12a) of the filling insert (12);
- associating a tail portion (50b) of the band-like reinforced element (50) to an angular portion of said annular portion of the side surface (12a) of the filling insert (12).

9. Process according to claim 8, wherein, after the step of associating a head portion (50a) of the band-like reinforced element (50) to an angular portion of said annular portion of the side surface (12a) of the filling insert (12), the following steps are carried out:
- rotating the service platform (105) around said rotational axis (X-X) of a first angle (α) greater than 270° and smaller than 360°;
- during the aforementioned rotation, associating new portions of the band-like reinforced element (50) to corresponding angular portions of said annular portion of the side surface (12a) of the filling insert (12);
- cutting to size the band-like reinforced element (50) thus obtaining a piece of band-like reinforced element (50) having a tail portion (50b);
- rotating the servile platform (105) by an angle at least equal to 360°-α around said rotational axis (X-X);
- during said rotation by at least 360°-α, associating the tail portion (50b) of said piece of band-like reinforced element (50) to said angular portion of said annular portion of the side surface (12a) of the filling insert (12).

10. Process according to claim 8, wherein said preset angle is equal to at least 360° and wherein the band-like reinforced element (50) is cut to size before being fed towards said annular portion of the side surface (12a) of the filling insert (12).

11. Process according to any one of claims 8 to 10, further comprising the step of joining the tail portion (50b) of the band-like reinforced element (50) to the head portion (50a) of the band-like reinforced element (50) by overlapping at least part of said tail portion (50b) to at least part of said head portion (50a).

12. Process according to any one of claims 8 to 11, wherein the step of feeding the band-like reinforced element (50) towards said annular portion of the side surface (12a) of the filling insert (12) comprises the step of guiding the band-like reinforced element (50) towards the service platform (105) along a feeding direction (G) which is tilted by a preset angle (p) with respect to the service platform (105) and which belongs to a plane perpendicular to a pointing plane containing the rotational axis (X-X) of the service platform (105).

13. Process according to claim 12, wherein the band-like reinforced element (50) is moved towards the service platform (105) up to bring a free end of the head portion (50a) of the band-like reinforced element (50) to a section (S) of the service platform (105) defined by the intersection of said feeding direction (G) with said pointing plane.

14. Process according to any one of claims 8 to 13, wherein the head portion (50a) of the band-like reinforced element (50) is obtained by cutting the band-like reinforced element (50) with a preset cutting angle, to form a head vertex (V) at an inner side surface of the band-like reinforced element (50).

15. Process according to any one of claims 8 to 14, wherein the annular reinforcing element (50) is associated to, and projects from, a radially external annular portion of the side surface (12a) of the filling insert (12).

16. Process according to any one of claims 8 to 15, wherein, during the step of feeding the band-like reinforced element (50) towards said annular portion of the side surface (12a) of the filling insert (12), the step of associating an element made of elastomer material (60) onto an outer side surface of the band-like reinforced element (50) is carried out.

17. Apparatus (100) for depositing an annular reinforcing element (5) onto an annular anchoring structure (10) of a tyre for vehicle wheels, the annular anchoring structure (10) comprising at least one substantially circumferential annular insert (11) and at least one filling insert (12) associated to the substantially circumferential annular insert (11), the apparatus (100) comprising:
- a service platform (105) having an operative surface (105a) adapted to receive said annular anchoring structure (10);
- a device (130) for loading/unloading the annular anchoring structure (10) onto/from the service platform (105) ;
- a device (140) for feeding a band-like reinforced element (50) towards the service platform (105);
- a member (170) for cutting to size the band-like reinforced element (50);
- a device (180) for depositing the band-like reinforced element (50) onto the annular anchoring structure (10); wherein the device (140) for feeding the band-like reinforced element (50) comprises an outlet portion (145) oriented towards said operative surface (105a) of the service platform (105) so as to associate an annular reinforcing element (60) to an annular portion of a side surface (12a) of the filling insert (12) in a radially outer position with respect to said substantially circumferential annular insert (11), so as to form a reinforced annular anchoring structure (15).

18. Apparatus (100) according to claim 17, wherein the device (130) for loading/unloading the annular anchoring structure (10) onto/from the service platform (105) comprises at least one motorised arm (131, 135) for catching and moving the annular anchoring element (10).

19. Apparatus (100) according to claim 18, wherein the device (130) for loading/unloading the annular anchoring structure (10) onto/from the service platform (105) comprises two motorised arms (131, 135) for catching and moving the annular anchoring structure (10), a first arm (131) being intended to load the annular anchoring structure (10) onto the service platform (105) and a second arm (135) being intended to unload the reinforced annular anchoring structure (15) from the service platform (105).

20. Apparatus (100) according to any one of claims 17 to 19, comprising, at the outlet portion (145) of the device (140) for feeding the band-like reinforced element (50), a pair of opposite side containment guides (149).

21. Apparatus (100) according to any one of claims 17 to 20, comprising, at the outlet portion (145) of the device (140) for feeding the band-like reinforced element (50) and between said cutting member (170) and the service platform (105), a U-shaped guide (150) for a tail portion of the band-like reinforced element.

22. Apparatus (100) according to any one of claims 17 to 21, wherein said cutting member (170) is arranged at the outlet portion (145) of the device (140) for feeding the band-like reinforced element (50) and comprises a disc-shaped blade (171), a support structure (173) of the blade (171) and an abutment body (175) of the blade (171) arranged in the outlet portion (145) of the device (140) for feeding the band-like reinforced element (50) on an opposite side to the blade (171) with respect to a feeding plane of the band-like reinforced element (50).

23. Apparatus (100) according to any one of claims 17 to 22, wherein the device (180) for depositing the band-like reinforced element (50) comprises at least one depositing roller (181) having a rotational axis parallel to the service platform (105), said at least one roller (181) being moveable along a direction (R) perpendicular to the service platform (105).

24. Apparatus (100) according to any one of claims 17 to 23, further comprising a member (190) for depositing an element made of elastomer material (60) onto a side surface of the band-like reinforced element (50).

25. Apparatus (100) according to claim 24, wherein said depositing member (190) comprises a plurality of rollers (191-195) arranged one after the other along a movement direction (M) of the band-like reinforced element (50) for depositing said element made of elastomer material (60) astride the side surface of the band-like reinforced element (50), wherein at least some of the respective rotational axes of said rollers (191-195) being askew with respect to each other.

## Patentansprüche

1. Verfahren zur Herstellung von Fahrzeugrädern, umfassend den Schritt der Fertigung einer Karkassenstruktur umfassend zumindest eine Karkassenlage, die an axial entgegengesetzten Endrändern davon jeweiligen ringförmigen Verankerungsstrukturen (10) zugeordnet ist, wobei jede ringförmige Verankerungsstruktur (10) zumindest einen im Wesentlichen umlaufenden ringförmigen Einsatz (11) und zumindest einen Fülleinsatz (12) umfasst, der dem Wesentlichen umlaufenden ringförmigen Einsatz (11) zugeordnet ist;
wobei der Schritt der Fertigung der Karkassenstruktur den Schritt der Bereitstellung zumindest eines ringförmigen Verstärkungselements (5) zwischen zumindest einem ringförmigen Abschnitt einer Seitenfläche (12a) des Fülleinsatzes (12) zumindest einer ringförmigen Verankerungsstruktur (10) und dem jeweiligen Endrand der Karkassenlage umfasst; wobei der Schritt der Bereitstellung des zumindest einen ringförmigen Verstärkungselements (5) die folgenden Schritte umfasst:
- Laden der ringförmigen Verankerungsstruktur (10) auf eine Betriebsplattform (105);
- Zuordnen des ringförmigen Verstärkungselements (5) an den ringförmigen Abschnitt der Seitenfläche (12a) des Fülleinsatzes (12) in einer in Bezug auf den im Wesentlichen umlaufenden ringförmigen Einsatz (11) radial äußeren Stellung, um so eine verstärkte ringförmige Verankerungsstruktur (15) zu bilden;
- Abladen der verstärkten ringförmigen Verankerungsstruktur (15) von der Betriebsplattform (105);
- Positionieren der verstärkten ringförmigen Verankerungsstruktur (15) an dem Endrand der Karkassenlage.

2. Verfahren nach Anspruch 1, wobei vor der Ausführung des Schritts des Positionierens der verstärkten ringförmigen Verankerungsstruktur (15) an dem Endrand der Karkassenlage die vorstehend erwähnten Schritte:
- Laden der ringförmigen Verankerungsstruktur (10) auf die Betriebsplattform (105);
- Zuordnen des ringförmigen Verstärkungselements (5) an den ringförmigen Abschnitt der Seitenfläche (12a) des Fülleinsatzes (12); und
- Abladen der verstärkten ringförmigen Verankerungsstruktur (15) von der Betriebsplattform (105);
für eine vorbestimmte Anzahl von Wiederholungen wiederholt werden, um eine entsprechende voreingestellte Anzahl verstärkter ringförmiger Verankerungsstrukturen (15) zu bilden.

3. Verfahren nach den Ansprüchen 1 oder 2, wobei zumindest ein Teil des Schritts des Zuordnens des ringförmigen Verstärkungselements (5) an den ringförmigen Abschnitt der Seitenfläche (12a) des Fülleinsatzes (12) gleichzeitig mit zumindest einem Teil zumindest eines der Schritte des Ladens einer neuen ringförmigen Verankerungsstruktur (10) auf die Betriebsplattform (105) und des Abladens einer neuen verstärkten ringförmigen Verankerungsstruktur (15) von der Betriebsplattform (105) ausgeführt wird.

4. Verfahren nach einem der vorhergehenden Ansprüche, wobei der Schritt des Ladens der ringförmigen Verankerungsstruktur (10) auf die Betriebsplattform (105) die folgenden Schritte umfasst:
- Abnehmen der ringförmigen Verankerungsstruktur (10) von einem ersten Lagerelement (101);
- Bewegen der ringförmigen Verankerungsstruktur (10) von dem ersten Lagerelement (101) zu der Betriebsplattform (105).

5. Verfahren nach einem der vorhergehenden Ansprüche, wobei der Schritt des Abladens der verstärkten ringförmigen Verankerungsstruktur (15) von der Betriebsplattform (105) die folgenden Schritte umfasst:
- Abnehmen der verstärkten ringförmigen Verankerungsstruktur (15) von der Betriebsplattform (105);
- Bewegen der verstärkten ringförmigen Verankerungsstruktur (15) von der Betriebsplattform (105) zu einem zweiten Lagerelement (102).

6. Verfahren zum Ablegen eines ringförmigen Verstärkungselements (5) auf eine ringförmige Verankerungsstruktur (10) eines Reifens für Fahrzeugräder, wobei die ringförmige Verankerungsstruktur (10) zumindest einen im Wesentlichen umlaufenden ringförmigen Einsatz (11) und zumindest einen Fülleinsatz (12) umfasst, der dem Wesentlichen umlaufenden ringförmigen Einsatz (11) zugeordnet ist, wobei das Verfahren die folgenden Schritte umfasst:
- Laden der ringförmigen Verankerungsstruktur (10) auf eine Betriebsplattform (105);
- Zuordnen des ringförmigen Verstärkungselements (5) an einen ringförmigen Abschnitt einer Seitenfläche (12a) des Fülleinsatzes (12) in einer in Bezug auf den im Wesentlichen umlaufenden ringförmigen Einsatz (11) radial äußeren Stellung, um so eine verstärkte ringförmige Verankerungsstruktur (15) zu bilden;
- Abladen der verstärkten ringförmigen Verankerungsstruktur (15) von der Betriebsplattform (105).

7. Verfahren nach einem der vorhergehenden Ansprüche, wobei der Schritt des Ladens der ringförmigen Verankerungsstruktur (10) auf der Betriebsplattform (105) die folgenden Schritte umfasst:
- Positionieren der ringförmigen Verankerungsstruktur (10) auf die Betriebsplattform (105);
- Zentrieren der ringförmigen Verankerungsstruktur (10) in Bezug auf eine Drehachse (X-X) der Betriebsplattform (105);
- Sichern der ringförmigen Verankerungsstruktur (10) an der Betriebsplattform (105) in der zentrierten Stellung.

8. Verfahren nach Anspruch 7, wobei der Schritt des Zuordnens des ringförmigen Verstärkungselements (5) an den ringförmigen Abschnitt der Seitenfläche (12a) des Fülleinsatzes (12) die folgenden Schritte umfasst:
- Zuführen eines streifenförmigen verstärkten Elements (50) zu dem ringförmigen Abschnitt der Seitenfläche (12a) des Fülleinsatzes (12);
- Zuordnen eines Kopfabschnitts (50a) des streifenförmigen verstärkten Elements (50) an einen Winkelabschnitt des ringförmigen Abschnitts der Seitenfläche (12a) des Fülleinsatzes (12);
- Drehen der Betriebsplattform (105) um einen voreingestellten Winkel (α) um die Drehachse (X-X);
- Zuordnen neuer Abschnitte des streifenförmigen verstärkten Elements (50) an entsprechende Winkelabschnitte des ringförmigen Abschnitts der Seitenfläche (12a) des Fülleinsatzes (12), während der vorstehend erwähnten Drehung;
- Zuordnen eines Endabschnitts (50b) des streifenförmigen verstärkten Elements (50) an einen Winkelabschnitt des ringförmigen Abschnitts der Seitenfläche (12a) des Fülleinsatzes (12).

9. Verfahren nach Anspruch 8, wobei nach dem Schritt des Zuordnens eines Kopfabschnitts (50a) des streifenförmigen verstärkten Elements (50) an einen Winkelabschnitt des ringförmigen Abschnitts der Seitenfläche (12a) des Fülleinsatzes (12) die folgenden Schritte ausgeführt werden:
- Drehen der Betriebsplattform (105) um die Drehachse (X-X) um einen ersten Winkel (α) größer als 270° und kleiner als 360°;
- Zuordnen neuer Abschnitte des streifenförmigen verstärkten Elements (50) an entsprechende Winkelabschnitte des ringförmigen Abschnitts der Seitenfläche (12a) des Fülleinsatzes (12) während der vorstehend erwähnten Drehung;
- Zuschneiden des streifenförmigen verstärkten Elements (50), um dadurch ein Stück des streifenförmigen verstärkten Elements (50) mit einem Endabschnitt (50b) zu erhalten;
- Drehen der Betriebsplattform (105) um einen Winkel zumindest gleich 360°-α um die Drehachse (X-X);
- Zuordnen des Endabschnitts (50b) des Stücks des streifenförmigen verstärkten Elements (50) an den Winkelabschnitt des ringförmigen Abschnitts der Seitenfläche (12a) des Fülleinsatzes (12) während der Drehung um zumindest 360°-α.

10. Verfahren nach Anspruch 8, wobei der voreingestellte Winkel gleich zumindest 360° ist, und wobei das streifenförmige verstärkte Element (50) zugeschnitten wird, bevor es zu dem ringförmigen Abschnitt der Seitenfläche (12a) des Fülleinsatzes (12) zugeführt wird.

11. Verfahren nach einem der Ansprüche 8 bis 10, des Weiteren umfassend den Schritt des Zusammenfügens des Endabschnitts (50b) des streifenförmigen verstärkten Elements (50) mit dem Kopfabschnitt (50a) des streifenförmigen verstärkten Elements (50) durch Überlappen zumindest eines Teils des Endabschnitts (50b) über zumindest einen Teil des Kopfabschnitts (50a).

12. Verfahren nach einem der Ansprüche 8 bis 11, wobei der Schritt des Zuführens des streifenförmigen verstärkten Elements (50) zu dem ringförmigen Abschnitt der Seitenfläche (12a) des Fülleinsatzes (12) den Schritt des Führens des streifenförmigen verstärkten Elements (50) zu der Betriebsplattform (105) entlang einer Zuführrichtung (G) umfasst, die um einen voreingestellten Winkel (β) relativ zu der Betriebsplattform (105) geneigt ist und die zu einer Ebene senkrecht zu einer Zeigerebene gehört, die die Drehachse (X-X) der Betriebsplattform (105) enthält.

13. Verfahren nach Anspruch 12, wobei das streifenförmige verstärkte Element (50) zu der Betriebsplattform (105) hin bewegt wird, um ein freies Ende des Kopfabschnitts (50a) des streifenförmigen verstärkten Elements (50) zu einem Abschnitt (S) der Betriebsplattform (105) zu bringen, der durch den Schnitt der Zuführrichtung (G) mit der Zeigerebene definiert wird.

14. Verfahren nach einem der Ansprüche 8 bis 13, wobei der Kopfabschnitt (50a) des streifenförmigen verstärkten Elements (50) erhalten wird, indem das streifenförmige verstärkte Element (50) mit einem voreingestellten Schnittwinkel zugeschnitten wird, um eine Kopfspitze (V) an einer inneren Seitenfläche des streifenförmigen verstärkten Elements (50) zu bilden.

15. Verfahren nach einem der Ansprüche 8 bis 14, wobei das ringförmige Verstärkungselement (50) einem radial äußeren ringförmigen Abschnitt der Seitenfläche (12a) des Fülleinsatzes (12) zugeordnet ist und von diesem wegragt.

16. Verfahren nach einem der Ansprüche 8 bis 15, wobei während des Schritts des Zuführens des streifenförmigen verstärkten Elements (50) zu dem ringförmigen Abschnitt der Seitenfläche (12a) des Fülleinsatzes (12) der Schritt des Zuordnens eines Elements aus einem elastomeren Material (60) an eine äußere Seitenfläche des streifenförmigen verstärkten Elements (50) ausgeführt wird.

17. Vorrichtung (100) zum Ablegen eines ringförmigen Verstärkungselements (5) auf eine ringförmige Verankerungsstruktur (10) eines Reifens für Fahrzeugräder, wobei die ringförmige Verankerungsstruktur (10) zumindest einen im Wesentlichen umlaufenden ringförmigen Einsatz (11) und zumindest einen Fülleinsatz (12) umfasst, der dem Wesentlichen umlaufenden ringförmigen Einsatz (11) zugeordnet ist, wobei die Vorrichtung (100) Folgendes umfasst:
- eine Betriebsplattform (105) mit einer Wirkoberfläche (105a), die dazu ausgebildet ist die ringförmige Verankerungsstruktur (10) aufzunehmen;
- eine Einrichtung (130) zum Laden/Abladen der ringförmigen Verankerungsstruktur (10) auf die/von der Betriebsplattform (105);
- eine Einrichtung (140) zur Zufuhr eines streifenförmigen verstärkten Elements (50) zu der Betriebsplattform (105);
- ein Element (170) zum Zuschneiden des streifenförmigen verstärkten Elements (50);
- eine Einrichtung (180) zum Ablegen des streifenförmigen verstärkten Elements (50) auf der ringförmigen Verankerungsstruktur (10);
wobei die Einrichtung (140) zur Zufuhr eines streifenförmigen verstärkten Elements (50) einen Auslassabschnitt (145) umfasst, der zu der Wirkoberfläche (105a) der Betriebsplattform (105) hin orientiert ist, um ein ringförmiges Verstärkungselement (60) einem ringförmigen Abschnitt einer Seitenfläche (12a) des Fülleinsatzes (12) in einer radial äußeren Stellung relativ zu dem im Wesentlichen umlaufenden ringförmigen Einsatz (11) zuzuordnen, um eine verstärkte ringförmige Verankerungsstruktur (15) zu bilden.

18. Vorrichtung (100) nach Anspruch 17, wobei die Einrichtung (130) zum Laden/Abladen der ringförmigen Verankerungsstruktur (10) auf die/von der Betriebsplattform (105) zumindest einen motorisierten Arm (131, 135) zum Ergreifen und Bewegen des ringförmigen Verankerungselements (10) umfasst.

19. Vorrichtung (100) nach Anspruch 18, wobei die Einrichtung (130) zum Laden/Abladen der ringförmigen Verankerungsstruktur (10) auf die/von der Betriebsplattform (105) zwei motorisierte Arme (131, 135) zum Ergreifen und Bewegen des ringförmigen Verankerungselements (10) umfasst, wobei ein erster Arm (131) dazu vorgesehen ist, die ringförmige Verankerungsstruktur (10) auf die Betriebsplattform (105) zu laden, und ein zweiter Arm (135) dazu vorgesehen ist, die verstärkte ringförmige Verankerungsstruktur (15) von der Betriebsplattform (105) abzuladen.

20. Vorrichtung (100) nach einem der Ansprüche 17 bis 19, umfassend ein Paar von Begrenzungsführungen (149) an gegenüberliegenden Seiten an dem Auslassabschnitt (145) der Einrichtung (140) zur Zufuhr des streifenförmigen verstärkten Elements (50).

21. Vorrichtung (100) nach einem der Ansprüche 17 bis 20, umfassend eine U-förmige Führung (150) für einen Endabschnitt des streifenförmigen verstärkten Elements an dem Auslassabschnitt (145) der Einrichtung (140) zur Zufuhr des streifenförmigen verstärkten Elements (50) und zwischen dem Zuschneidelement (170) und der Betriebsplattform (105).

22. Vorrichtung (100) nach einem der Ansprüche 17 bis 21, wobei das Zuschneidelement (170) an dem Auslassabschnitt (145) der Einrichtung (140) zur Zufuhr des streifenförmigen verstärkten Elements (50) angeordnet ist und ein scheibenförmiges Schneidblatt (171), eine Trägerstruktur (173) des Schneidblatts (171) und einen Anschlagskörper (175) des Schneidblatts (171) umfasst, der in dem Auslassabschnitt (145) der Einrichtung (140) zur Zufuhr des streifenförmigen verstärkten Elements (50) an einer gegenüberliegenden Seite zu dem Schneidblatt (171) relativ zu einer Zufuhrebene des streifenförmigen verstärkten Elements (50) angeordnet ist.

23. Vorrichtung (100) nach einem der Ansprüche 17 bis 22, wobei die Einrichtung (180) zum Ablegen des streifenförmigen verstärkten Element (50) zumindest eine Ablegerolle (181) mit einer Drehachse parallel zu der Betriebsplattform (105) umfasst, wobei die zumindest eine Rolle (181) entlang einer Richtung (R) senkrecht zu der Betriebsplattform (105) bewegbar ist.

24. Vorrichtung (100) nach einem der Ansprüche 17 bis 23, des Weiteren umfassend ein Element (190) zum Ablegen eines Elements aus elastomerem Material (60) auf eine Seitenfläche des streifenförmigen verstärkten Elements (50).

25. Vorrichtung (100) nach Anspruch 24, wobei das Ablegeelement (190) eine Vielzahl von Rollen (191-195) umfasst, die nacheinander entlang einer Bewegungsrichtung (M) des streifenförmigen verstärkten Elements (50) angeordnet sind, um das Element aus elastomerem Material (60) auf der Seitenfläche des streifenförmigen verstärkten Elements (50) aufliegend abzulegen, wobei zumindest einige der jeweiligen Drehachsen der Rolle (191-195) relativ zueinander schräg sind.

## Revendications

1. Procédé de fabrication de pneus pour roues de véhicule, comprenant l'étape consistant à construire une structure de carcasse comprenant au moins un pli de carcasse associé, à des bords d'extrémité axialement opposées de celle-ci, à des structures d'ancrage annulaires (10) respectives, chaque structure d'ancrage annulaire (10) comprenant au moins une pièce rapportée annulaire sensiblement circonférentielle (11) et au moins une pièce rapportée de remplissage (12) associée à la pièce rapportée annulaire sensiblement circonférentielle (11) ;
dans lequel l'étape consistant à construire la structure de carcasse comprend l'étape consistant à fournir au moins un élément de renfort annulaire (5) entre au moins une partie annulaire d'une surface latérale (12a) de la pièce rapportée de remplissage (12) d'au moins une structure d'ancrage annulaire (10) et le bord d'extrémité du pli de carcasse respectif ;
dans lequel l'étape consistant à fournir ledit au moins un élément de renfort annulaire (5) comprend les étapes consistant :
- à charger la structure d'ancrage annulaire (10) sur une plate-forme de service (105) ;
- à associer l'élément de renfort annulaire (5) à la partie annulaire de la surface latérale (12a) de la pièce rapportée de remplissage (12) dans une position radialement extérieure par rapport à ladite pièce rapportée annulaire sensiblement circonférentielle (11), afin de former une structure d'ancrage annulaire renforcée (15) ;
- à décharger la structure d'ancrage annulaire renforcée (15) de la plate-forme de service (105) ;
- à positionner la structure d'ancrage annulaire renforcée (15) sur le bord d'extrémité du pli de carcasse.

2. Procédé selon la revendication 1, dans lequel, avant de réaliser l'étape consistant à positionner la structure d'ancrage annulaire renforcée (15) sur le bord d'extrémité du pli de carcasse, les étapes susmentionnées consistant :
- à charger la structure d'ancrage annulaire (10) sur la plate-forme de service (105) ;
- à associer l'élément de renfort annulaire (5) à la partie annulaire de la surface latérale (12a) de la pièce rapportée de remplissage (12) ; et
- à décharger la structure d'ancrage annulaire renforcée (15) de la plate-forme de service (105) ;
sont répétées un nombre de fois prédéfini pour former un nombre prédéfini correspondant de structures d'ancrage annulaires renforcées (15).

3. Procédé selon les revendications 1 ou 2, dans lequel au moins une partie de l'étape consistant à associer l'élément de renfort annulaire (5) à la partie annulaire de la surface latérale (12a) de la pièce rapportée de remplissage (12) est réalisée simultanément avec au moins une partie d'au moins l'une des étapes de chargement d'une nouvelle structure d'ancrage annulaire (10) sur la plate-forme de service (105) et de déchargement d'une nouvelle structure d'ancrage annulaire renforcée (15) de la plate-forme de service (105).

4. Procédé selon l'une quelconque des revendications précédentes, dans lequel l'étape de chargement de la structure d'ancrage annulaire (10) sur la plate-forme de service (105) comprend les étapes consistant :
- à prendre la structure d'ancrage annulaire (10) à partir d'un premier élément de stockage (101) ;
- à déplacer la structure d'ancrage annulaire (10) à partir du premier élément de stockage (101) vers la plate-forme de service (105).

5. Procédé selon l'une quelconque des revendications précédentes, dans lequel l'étape consistant à décharger la structure d'ancrage annulaire renforcée (15) de la plate-forme de service (105) comprend les étapes consistant :
- à prendre la structure d'ancrage annulaire renforcée (15) à partir de la plate-forme de service (105) ;
- à déplacer la structure d'ancrage annulaire renforcée (15) à partir de la plate-forme de service (105) vers un deuxième élément de stockage (102).

6. Procédé de dépôt d'un élément de renfort annulaire (5) sur une structure d'ancrage annulaire (10) d'un pneu pour roues de véhicule, la structure d'ancrage annulaire (10) comprenant au moins une pièce rapportée annulaire sensiblement circonférentielle (11) et au moins une pièce rapportée de remplissage (12) associée à la pièce rapportée annulaire sensiblement circonférentielle (11), le procédé comprenant les étapes consistant :
- à charger la structure d'ancrage annulaire (10) sur une plate-forme de service (105) ;
- à associer ledit élément de renfort annulaire (5) à une partie annulaire d'une surface latérale (12a) de la pièce rapportée de remplissage (12) dans une position radialement extérieure par rapport à ladite pièce rapportée annulaire sensiblement circonférentielle (11), afin de former une structure d'ancrage annulaire renforcée (15) ;
- à décharger la structure d'ancrage annulaire renforcée (15) de la plate-forme de service (105).

7. Procédé selon l'une des revendications précédentes, dans lequel l'étape consistant à charger la structure d'ancrage annulaire (10) sur la plate-forme de service (105) comprend les étapes consistant :
- à positionner la structure d'ancrage annulaire (10) sur la plate-forme de service (105) ;
- à centrer la structure d'ancrage annulaire (10) par rapport à un axe de rotation (X-X) de la plate-forme de service (105) ;
- à verrouiller la structure d'ancrage annulaire (10) sur la plate-forme de service (105) dans la position centrée.

8. Procédé selon la revendication 7, dans lequel l'étape consistant à associer l'élément de renfort annulaire (5) à la partie annulaire de la surface latérale (12a) de la pièce rapportée de remplissage (12) comprend les étapes consistant :
- à acheminer un élément renforcé en forme de bande (50) en direction de ladite partie annulaire de la surface latérale (12a) de la pièce rapportée de remplissage (12) ;
- à associer une partie de tête (50a) de l'élément renforcé en forme de bande (50) à une partie angulaire de ladite partie annulaire de la surface latérale (12a) de la pièce rapportée de remplissage (12) ;
- à faire tourner la plate-forme de service (105) d'un angle prédéfini (α) autour dudit axe de rotation (X-X) ;
- à associer, durant la rotation susmentionnée, de nouvelles parties de l'élément renforcé en forme de bande (50) à des parties angulaires correspondantes de ladite partie annulaire de la surface latérale (12a) de la pièce rapportée de remplissage (12) ;
- à associer une partie arrière (50b) de l'élément renforcé en forme de bande (50) à une partie angulaire de ladite partie annulaire de la surface latérale (12a) de la pièce rapportée de remplissage (12).

9. Procédé selon la revendication 8, dans lequel, après l'étape consistant à associer une partie de tête (50a) de l'élément renforcé en forme de bande (50) à une partie angulaire de ladite partie annulaire de la surface latérale (12a) de la pièce rapportée de remplissage (12), les étapes suivantes sont réalisées :
- la mise en rotation de la plate-forme de service (105) autour dudit axe de rotation (X-X) d'un premier angle (α) supérieur à 270° et inférieur à 360° ;
- l'association, durant la rotation susmentionnée, de nouvelles parties de l'élément renforcé en forme de bande (50) avec des parties angulaires correspondantes de ladite partie annulaire de la surface latérale (12a) de la pièce rapportée de remplissage (12) ;
- la découpe à la dimension voulue de l'élément renforcé en forme de bande (50) ce qui permet d'obtenir une pièce d'un élément renforcé en forme de bande (50) ayant une partie arrière (50b) ;
- la mise en rotation de la plate-forme de service (105) d'un angle au moins égal à 360°-α autour dudit axe de rotation (X-X) ;
- l'association, durant ladite rotation d'au moins 360°-α, de la partie arrière (50b) de ladite pièce d'un élément renforcé en forme de bande (50) avec ladite partie angulaire de ladite partie annulaire de la surface latérale (12a) de la pièce rapportée de remplissage (12).

10. Procédé selon la revendication 8, dans lequel ledit angle prédéfini est égal à au moins 360° et dans lequel l'élément renforcé en forme de bande (50) est découpé à la dimension voulue avant d'être acheminé en direction de ladite partie annulaire de la surface latérale (12a) de la pièce rapportée de remplissage (12).

11. Procédé selon l'une quelconque des revendications 8 à 10, comprenant en outre l'étape consistant à joindre la partie arrière (50b) de l'élément renforcé en forme de bande (50) à la partie de tête (50a) de l'élément renforcé en forme de bande (50) en superposant au moins une partie de ladite partie arrière (50b) sur au moins une partie de ladite partie de tête (50a).

12. Procédé selon l'une quelconque des revendications 8 à 11, dans lequel l'étape consistant à acheminer l'élément renforcé en forme de bande (50) en direction de ladite partie annulaire de la surface latérale (12a) de la pièce rapportée de remplissage (12) comprend l'étape consistant à guider l'élément renforcé en forme de bande (50) en direction de la plate-forme de service (105) le long d'une direction d'acheminement (G) qui est inclinée d'un angle prédéfini (β) par rapport à la plate-forme de service (105) et qui appartient à un plan perpendiculaire à un plan orienté contenant l'axe de rotation (X-X) de la plate-forme de service (105).

13. Procédé selon la revendication 12, dans lequel l'élément renforcé en forme de bande (50) est déplacé en direction de la plate-forme de service (105) jusqu'à amener une extrémité libre de la partie de tête (50a) de l'élément renforcé en forme de bande (50) à une section (S) de la plate-forme de service (105) définie par l'intersection de ladite direction d'acheminement (G) avec ledit plan orienté.

14. Procédé selon l'une quelconque des revendications 8 à 13, dans lequel la partie de tête (50a) de l'élément renforcé en forme de bande (50) est obtenue en découpant l'élément renforcé en forme de bande (50) avec un angle de coupe prédéfini, pour former un sommet de tête (V) au niveau d'une surface latérale intérieure de l'élément renforcé en forme de bande (50).

15. Procédé selon l'une quelconque des revendications 8 à 14, dans lequel l'élément de renfort annulaire (50) est associé à, et fait saillie à partir de, une partie annulaire radialement externe de la surface latérale (12a) de la pièce rapportée de remplissage (12).

16. Procédé selon l'une quelconque des revendications 8 à 15, dans lequel, durant l'étape consistant à acheminer l'élément renforcé en forme de bande (50) en direction de ladite partie annulaire de la surface latérale (12a) de la pièce rapportée de remplissage (12), l'étape consistant à associer un élément réalisé en matériau élastomère (60) sur une surface latérale extérieure de l'élément renforcé en forme de bande (50) est réalisée.

17. Appareil (100) de dépôt d'un élément de renfort annulaire (5) sur une structure d'ancrage annulaire (10) d'un pneu pour roues de véhicule, la structure d'ancrage annulaire (10) comprenant au moins une pièce rapportée annulaire sensiblement circonférentielle (11) et au moins une pièce rapportée de remplissage (12) associée à la pièce rapportée annulaire sensiblement circonférentielle (11), l'appareil (100) comprenant :
- une plate-forme de service (105) ayant une surface fonctionnelle (105a) adaptée pour recevoir ladite structure d'ancrage annulaire (10) ;
- un dispositif (130) pour le chargement/déchargement de la structure d'ancrage annulaire (10) sur/de la plate-forme de service (105) ;
- un dispositif (140) pour l'acheminement d'un élément renforcé en forme de bande (50) en direction de la plate-forme de service (105) ;
- un élément (170) pour le découpage à la dimension voulue l'élément renforcé en forme de bande (50) ;
- un dispositif (180) pour le dépôt de l'élément renforcé en forme de bande (50) sur la structure d'ancrage annulaire (10) ;
où le dispositif (140) pour l'acheminement de l'élément renforcé en forme de bande (50) comprend une partie de sortie (145) orientée en direction de ladite surface fonctionnelle (105a) de la plate-forme de service (105) afin d'associer un élément de renfort annulaire (60) à une partie annulaire d'une surface latérale (12a) de la pièce rapportée de remplissage (12) dans une position radialement extérieure par rapport à ladite pièce rapportée annulaire sensiblement circonférentielle (11), afin de former une structure d'ancrage annulaire renforcée (15).

18. Appareil (100) selon la revendication 17, dans lequel le dispositif (130) pour le chargement/déchargement de la structure d'ancrage annulaire (10) sur/de la plate-forme de service (105) comprend au moins un bras motorisé (131, 135) pour la saisie et le déplacement de l'élément d'ancrage annulaire (10).

19. Appareil (100) selon la revendication 18, dans lequel le dispositif (130) pour le chargement/déchargement de la structure d'ancrage annulaire (10) sur/ de la plate-forme de service (105) comprend deux bras motorisés (131, 135) pour la saisie et le déplacement de la structure d'ancrage annulaire (10), un premier bras (131) étant destiné à charger la structure d'ancrage annulaire (10) sur la plate-forme de service (105) et un deuxième bras (135) étant destiné à décharger la structure d'ancrage annulaire renforcée (15) de la plate-forme de service (105).

20. Appareil (100) selon l'une quelconque des revendications 17 à 19, comprenant, au niveau de la partie de sortie (145) du dispositif (140) pour l'acheminement de l'élément renforcé en forme de bande (50), une paire de guides de confinement latéraux opposés (149).

21. Appareil (100) selon l'une quelconque des revendications 17 à 20, comprenant, au niveau de la partie de sortie (145) du dispositif (140) pour l'acheminement de l'élément renforcé en forme de bande (50) et entre ledit élément de découpe (170) et la plate-forme de services (105), un guide en forme de U (150) pour une partie arrière de l'élément renforcé en forme de bande.

22. Appareil (100) selon l'une quelconque des revendications 17 à 21, dans lequel ledit élément de découpe (170) est agencé au niveau de la partie de sortie (145) du dispositif (140) pour l'acheminement de l'élément renforcé en forme de bande (50) et comprend une lame en forme de disque (171), une structure de support (173) de la lame (171) et un corps de butée (175) de la lame (171) agencés dans la partie de sortie (145) du dispositif (140) pour l'acheminement de l'élément renforcé en forme de bande (50) sur un côté opposé à la lame (171) par rapport à un plan d'acheminement de l'élément renforcé en forme de bande (50).

23. Appareil (100) selon l'une quelconque des revendications 17 à 22, dans lequel le dispositif (180) pour le dépôt de l'élément renforcé en forme de bande (50) comprend au moins un rouleau de dépôt (181) ayant un axe de rotation parallèle à la plate-forme de service (105), ledit au moins un rouleau (181) étant mobile le long d'une direction (R) perpendiculaire à la plate-forme de service (105) .

24. Appareil (100) selon l'une quelconque des revendications 17 à 23, comprenant en outre un élément (190) pour le dépôt d'un élément réalisé en matériau élastomère (60) sur une surface latérale de l'élément renforcé en forme de bande (50).

25. Appareil (100) selon la revendication 24, dans lequel ledit élément de dépôt (190) comprend une pluralité de rouleaux (191-195) agencés l'un après l'autre le long d'une direction de mouvement (M) de l'élément renforcé en forme de bande (50) pour le dépôt dudit élément réalisé en matériau élastomère (60) à cheval sur la surface latérale de l'élément renforcé en forme de bande (50), où au moins certains des axes de rotation respectifs desdits rouleaux (191-195) ayant un gauchissement les uns par rapport aux autres.
